# EUROPEAN PATENT SPECIFICATION

(11) **EP 3 906 744 B1**
(45) Date of publication and mention of the grant of the patent: **18.11.2026**
(21) Application number: 20736023.1
(22) Date of filing: 03.01.2020
(51) Int. Cl.: H04W 16/14, H04W 52/14, H04W 52/24

(54) **INTER-NETWORK ACCESS MANAGEMENT FOR SHARED SPECTRUM SYSTEMS**
INTERNETZWERKZUGRIFFSVERWALTUNG FÜR GEMEINSAM GENUTZTE SPEKTRENSYSTEME
GESTION D'ACCÈS INTER-RÉSEAUX POUR SYSTÈMES À SPECTRE PARTAGÉ

(30) Priority: 03.01.2019 US 201962787821 P; 31.12.2019 US 201916732190
(43) Date of publication of application: 10.11.2021
(73) Proprietor: Samsung Electronics Co., Ltd., Suwon-si, Gyeonggi-do 16677 (KR)
(72) Inventor: JEON, Jeongho, Gyeonggi-do 16677 (KR); RATNAM, Vishnu Vardhan, Gyeonggi-do 16677 (KR); CHO, Joonyoung, Gyeonggi-do 16677 (KR)
(74) Representative: Gulde & Partner
(86) International application number: PCT/KR2020/000147
(87) International publication number: WO 2020/141948

(56) References cited:
- WO-A1-2014/036699
- WO-A1-2014/101482
- WO-A2-2014/117135
- US-A1- 2006 223 448
- US-A1- 2015 341 921
- US-A1- 2015 373 554
- US-A1- 2016 119 931
- US-B2- 7 526 255
- NAN HAO ET AL: "ANCPC: Adaptive Neighbor Coordinated Interference Avoidance Power Control for Cognitive Radio Ad Hoc Networks", CONSUMER COMMUNICATIONS AND NETWORKING CONFERENCE (CCNC), 2010 7TH IEEE, IEEE, PISCATAWAY, NJ, USA, 9 January 2010 (2010-01-09), pages 1 - 6, XP031642969, ISBN: 978-1-4244-5175-3

## Description

### [Technical Field]

The present application relates generally to wireless communication systems, more specifically, the present disclosure relates to inter-network access management in an shared spectrum wireless communication systems.

### [Background Art]

To meet the demand for wireless data traffic having increased since deployment of 4th generation (4G) communication systems, efforts have been made to develop an improved 5th generation (5G) or pre-5G communication system. The 5G or pre-5G communication system is also called a 'beyond 4G network' or a 'post long term evolution (LTE) system'. The 5G communication system is considered to be implemented in higher frequency (mmWave) bands, e.g., 60 GHz bands, so as to accomplish higher data rates. To decrease propagation loss of the radio waves and increase the transmission distance, beamforming, massive multiple-input multiple-output (MIMO), full dimensional MIMO (FD-MIMO), array antenna, analog beamforming, and large scale antenna techniques are discussed with respect to 5G communication systems. In addition, in 5G communication systems, development for system network improvement is under way based on advanced small cells, cloud radio access networks (RANs), ultra-dense networks, device-to-device (D2D) communication, wireless backhaul, moving network, cooperative communication, coordinated multi-points (CoMP), reception-end interference cancellation and the like. In the 5G system, hybrid frequency shift keying (FSK) and Feher's quadrature amplitude modulation (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have been developed.

The Internet, which is a human centered connectivity network where humans generate and consume information, is now evolving to the Internet of things (IoT) where distributed entities, such as things, exchange and process information without human intervention. The Internet of everything (IoE), which is a combination of the loT technology and the big data processing technology through connection with a cloud server, has emerged. As technology elements, such as "sensing technology", "wired/wireless communication and network infrastructure", "service interface technology", and "security technology" have been demanded for loT implementation, a sensor network, a machine-to-machine (M2M) communication, machine type communication (MTC), and so forth have been recently researched. Such an loT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply 5G communication systems to IoT networks. For example, technologies such as a sensor network, MTC, and M2M communication may be implemented by beamforming, MIMO, and array antennas. Application of a cloud RAN as the above-described big data processing technology may also be considered to be as an example of convergence between the 5G technology and the loT technology.

WO2014/117135A2 relates a method for a requesting system to obtain shared spectrum for use by a plurality of wireless transmit/receive units (WTRUs). US2006/223448A1 relates a method and a system for coordinating radio resource usage by a plurality of wireless devices in an unlicensed frequency band. WO2014/036699A1 relates to a coordinated scheduling method between different nodes.

As described above, various services can be provided according to the development of a wireless communication system, and thus a method for easily providing such services is required.

### [Summary of Invention]

The present invention is defined by the appended set of claims.

In one embodiment, a base station in a wireless communication system related to shared spectrum resources is provided as defined by the appended claims.

In another one embodiment, a method for operating a base station in a wireless communication system related to shared spectrum resources is provided as defined by the appended claims.

### [Disclosure]

### [Description of Drawings]

For a more complete understanding of the present disclosure and its advantages, reference is now made to the following description taken in conjunction with the accompanying drawings, in which like reference numerals represent like parts:
FIGURE 1 illustrates an example wireless network according to embodiments of the present disclosure;
FIGURE 2 illustrates an example network entity of a gNB according to embodiments of the present disclosure;
FIGURE 3 illustrates an example UE according to embodiments of the present disclosure;
FIGURE 4 illustrates an example transmitter structure using OFDM according to embodiments of the present disclosure;
FIGURE 5 illustrates an example receiver structure using OFDM according to embodiments of the present disclosure;
FIGURE 6 illustrates an example encoding process for a DCI format according to embodiments of the present disclosure;
FIGURE 7 illustrates an example decoding process for a DCI format for use with a UE according to embodiments of the present disclosure;
FIGURE 8 illustrates an example multiple base stations (BS) of different MNOs according to embodiments of the present disclosure;
FIGURE 9 illustrates an example spectrum sharing according to embodiments of the present disclosure;
FIGURE 10 illustrates an example overall sharing framework according to claimed embodiments of the present disclosure;
FIGURE 11 illustrates a flowchart of a method for sharing framework according to claimed embodiments of the present disclosure;
FIGURE 12 illustrates an example coordination period according to claimed embodiments of the present disclosure;
FIGURE 13 illustrates an example DTP structure according to claimed embodiments of the present disclosure;
FIGURE 14 illustrates an example coordination message exchanges according to claimed embodiments of the present disclosure;
FIGURE 15 illustrates a flowchart of a method for determining the power adjustment for CP according to embodiments of the present disclosure:
FIGURE 16 illustrates a flowchart of a method for deciding the C-REP response according to embodiments of the present disclosure:
FIGURE 17 illustrates an example detection threshold function according to embodiments of the present disclosure;
FIGURE 18 illustrates an example channel sensing for opportunistic data transmission according to embodiments of the present disclosure:
FIGURE 19 illustrates a flowchart of a method for determining the opportunistic transmission according to embodiments of the present disclosurel
FIGURE 20 illustrates an example spectrum sharing according to embodiments of the present disclosure;
FIGURE 21 illustrates an example of a method for operating a network entity in a wireless communication system of shared spectrum resources according to embodiments of the present disclosure;
FIGURE 22 illustrates a block diagram illustrating the structure of a network entity according to embodiments of the present disclosure; and
FIGURE 23 illustrates a block diagram illustrating the structure of a user equipment (UE) according to embodiments of the present disclosure.

### [Best Mode for Carrying out the Invention]

The present disclosure relates to inter-network access management in an advanced shared spectrum wireless communication system.

In one embodiment, a network entity in a wireless communication system of shared spectrum resources is provided. The network entity may include a transceiver and at least one processor operably connected to the transceiver. The at least one processor may be configured to control the transceiver to transmit, to a set of neighbor network entities in the wireless communication system, a coordination request message indicating an intended transmission power for a data transmission by the network entity; and to receive, from at least one of the set of neighbor network entities, a coordination response message in response to the coordination request message. The at least one processor may determine resources of the shared spectrum resources to use for the data transmission based on the intended transmission power and the coordination response message. The at least one processor may control the transceiver to transmit, to at least one terminal in a cell of the network entity, the data transmission based on the determined resources.

In one embodiment, a signal for the coordination request message is transmitted at the intended transmission power to indicate the intended transmission power and/or the signal for the coordination request message is transmitted at the intended transmission power increased by a threshold amount to indicate the intended transmission power and the threshold amount is preset or indicated in the coordination request message.

In one embodiment, the at least one processor is further configured to control the transceiver to receive, from another of the set of neighbor network entities, a coordination request message. The at least one processor may determine whether the other neighbor network entity is within an interference range of the network entity based on the received coordination request message and the intended transmission power of the network entity. In addition, the at least one processor may further determine whether to transmit a coordination response message to the other neighbor network entity based on the determination of whether the other neighbor network entity is within the interference range of the network entity.

In one embodiment, to determine whether the other neighbor network entity would cause interference to the network entity, the at least one processor may compare at least a receive power of a signal for the received coordination request message with a threshold that is a function of the intended transmission power of the network entity.

In one embodiment, to determine the resources of the shared spectrum resources to use for the data transmission, the at least one processor may determine, based on sensing, whether the resources, which are not reserved for the network entity, are idle for an initial offset during a data transmission period, and determine to use the resources for the data transmission for the data transmission period based on determining that the resources are idle for the initial offset.

In one embodiment, the at least one processor may use a random backoff counter, when the resources are sensed as idle for the initial offset, to perform additional random backoff before using the resources for the data transmission.

In one embodiment, the at least one processor may be further configured to control the transceiver to receive a signal transmitted by another of the set of neighbor network entities. In addition, the at least one processor may determine, based on the received signal, whether transmitting the data transmission at the intended transmission power would cause the network entity to interfere with transmissions of the other neighbor network entity. Based on determining that transmitting at the intended transmission power would cause interference, the at least one processor may determine an amount to decrease the intended transmission power by to avoid the interference and whether the network entity can transmit the data transmission at the decreased amount.

In one embodiment, the at least one processor may determine whether transmitting the data transmission at the intended transmission power would cause the network entity to interfere with transmissions of the other neighbor network entity based on comparison of at least a receive power of the received signal with a threshold, which is a function of the intended transmission power of the network entity, minus a spatial reuse parameter.

In one embodiment, the at least one processor may determine a phase to not perform spectrum resource sharing. In addition, the at least one processor may control the transceiver to transmit, to the set of neighbor network entities, a coordination request message indicating a fixed amount of spectrum resources reserved by the network entity during the phase for indication to neighbors of the set of neighbor network entities.

In one embodiment, the coordination request or response messages include at least one of a cell identifier, an operator identifier, a transmission power level, transmission beam information, a resource reservation success ratio, a priority level of the network entity for the shared spectrum resources, and/or an amount of bandwidth requested by the network entity.

In another one embodiment, a method for operating a network entity in a wireless communication system of shared spectrum resources is provided. The method may include transmitting, to a set of neighbor network entities in the wireless communication system, a coordination request message indicating an intended transmission power for a data transmission by the network entity; and receiving, from at least one of the set of neighbor network entities, a coordination response message in response to the coordination request message. The method may further include determining resources of the shared spectrum resources to use for the data transmission based on the intended transmission power and the coordination response message; and transmitting, to at least one terminal in a cell of the network entity, the data transmission based on the determined resources.

In another one embodiment, a signal for the coordination request message may be transmitted at the intended transmission power to indicate the intended transmission power and/or the signal for the coordination request message may be transmitted at the intended transmission power increased by a threshold amount to indicate the intended transmission power and the threshold amount is preset or indicated in the coordination request message.

In another one embodiment, the method may further include receiving, from another of the set of neighbor network entities, a coordination request message, determining whether the other neighbor network entity is within an interference range of the network entity based on the received coordination request message and the intended transmission power of the network entity, and determining whether to transmit a coordination response message to the other neighbor network entity based on the determination of whether the other neighbor network entity is within the interference range of the network entity.

In another one embodiment, determining whether the other neighbor network entity would cause interference to the network entity may comprises at least a receive power of a signal for the received coordination request message with a threshold that is a function of the intended transmission power of the network entity.

In another one embodiment, determining the resources of the shared spectrum resources to use for the data transmission, may comprise determining, based on sensing, whether the resources, which are not reserved for the network entity, are idle for an initial offset during a data transmission period, and determining to use the resources for the data transmission for the data transmission period based on determining that the resources are idle for the initial offset.

In another one embodiment, the method may further include using a random backoff counter when the resources are sensed as idle for the initial offset, to perform additional random backoff before using the resources for the data transmission.

In another one embodiment, determining whether transmitting the data transmission at the intended transmission power would cause the network entity to interfere with transmissions of the other neighbor network entity is based on comparison of at least a receive power of the received signal with a threshold, which is a function of the intended transmission power of the network entity, minus a spatial reuse parameter.

In another one embodiment, the method may further include determine a phase to not perform spectrum resource sharing, and transmitting, to the set of neighbor network entities, a coordination request message indicating a fixed amount of spectrum resources reserved by the network entity during the phase for indication to neighbors of the set of neighbor network entities.

In another one embodiment, the method may further include receiving a signal transmitted by another of the set of neighbor network entities, determining, based on the received signal, whether transmitting the data transmission at the intended transmission power would cause the network entity to interfere with transmissions of the other neighbor network entity, and based on determining that transmitting at the intended transmission power would cause interference, determining an amount to decrease the intended transmission power by to avoid the interference and whether the network entity can transmit the data transmission at the decreased amount.

In another one embodiment, the coordination request or response messages include at least one of a cell identifier, an operator identifier, a transmission power level, transmission beam information, a resource reservation success ratio, a priority level of the network entity for the shared spectrum resources, and/or an amount of bandwidth requested by the network entity.

The present disclosure also relates to efficiently sharing a frequency between base stations of the same business entity or different business entities in an unlicensed frequency band or a shared frequency band.

In one embodiment, a base station (BS) in a wireless communication system of shared spectrum resources between base stations of the same business entity or different business entities in an unlicensed frequency band or a shared frequency band are provided. The BS may include a transceiver and at least one processor operably connected to the transceiver. The at least one processor may be configured to determine a transmission signal power used to transmit data to at least one user equipment (UE) connected to the base station, determine a transmission signal power of a coordination request message (C-REQ) based on the determined transmission signal power used to transmit data, and broadcast the coordination request message (C-REQ) to at least one neighboring base station at the determined transmission signal power of the coordination request message (C-REQ).

In one embodiment, the at least one processor may be further configured to determine the transmission signal power used to transmit data to be low when the at least one of UE is adjacent to the BS, and to be high when the at least one UE is remote from the BS.

In one embodiment, the coordination request message (C-REQ) may be transmitted to coordinate, with other entity, a frequency to be used in an unlicensed frequency band or a shared frequency band.

In one embodiment, the at least one processor may be further configured to determine the determined transmission signal power used to transmit data and the determined transmission signal power of the coordination request message (C-REQ) to be equal to estimate an interference level to occur in an actual data transmission period by the at least one neighboring base station.

In one embodiment, the at least one processor may be further configured to determine the determined transmission signal power of the coordination request message (C-REQ) to be higher by a delta value that determined transmission signal power used to transmit data, and transmit the coordination request message (C-REQ) including information of the delta value to the at least one neighboring base station. According to one embodiment, the at least one neighboring base station can receive the coordination request message (C-REQ) with a higher reliability because the determined transmission signal power of the coordination request message (C-REQ) to be higher by a delta value that determined transmission signal power used to transmit data. In addition, the coordination request message (C-REQ) including information of the delta value can make the at least one neighboring base station to accurately estimate an interference level in an actual data transmission period.

In one embodiment, a base station (BS) in a wireless communication system of shared spectrum resources between base stations of the same business entity or different business entities in an unlicensed frequency band or a shared frequency band are provided. The BS may include a transceiver and at least one processor operably connected to the transceiver. The at least one processor may be configured to determine a transmission signal power used to transmit data to at least one user equipment (UE) connected to the base station, determine a threshold value based on the determined transmission signal power used to transmit data, wherein the threshold value is used in a process of determining whether to respond to a coordination request message (C-REQ) received in a coordination phase, determine whether to transmit a coordination response message (C-REP) by comparing a reception signal power of the coordination request message (C-REQ) with the determine threshold value when the BS receives, from the at least one neighboring base station, the coordination request message (C-REQ), and transmit the coordination response message (C-REP) to the at least one neighboring base station that transmits the coordination request message (C-REQ) when the BS determines to transmit the coordination response message (C-REP).

In one embodiment, the at least one processor may be configured to determine the transmission signal power used to transmit data to be low when the at least one user equipment (UE) is adjacent to the BS, and determine the transmission signal power used to transmit data to be high when the at least one user equipment (UE) is remote from the BS.

In one embodiment, when determining the threshold value, the at least one processor may be further configured to determine the threshold value to be decreased when the BS uses a high transmission signal power used to transmit data, or determine the threshold value to be increased wheh the BS uses a low transmission signal power used to transmit data.

According to one embodiment, when the base station uses the transmission signal power used to transmit data, a remote base station may be affected by a relatively high interference, and thus the base station sets the threshold value to be low and transmits the coordination response message (C-REP), establishing a mutual neighbor relationship with the at least one neighboring base station and deriving orthogonal division of resources.

In one embodiment, when comparing the reception signal power of the coordination request message (C-REQ) with the determined threshold value, wherein the at least one processor may be configured to identify the information of the delta value included in the coordination request message (C-REQ) when the coordination request message (C-REQ) has been power-boosted and then transmitted, decrease the reception signal power of the coordination request message (C-REQ) by the delta value, compare the decreased the reception signal power with the determined threshold value, and transmit the coordination response message (C-REP) when the decreased the reception signal power exceeds the threshold value.

In one embodiment, the at least one processor may be configured to transmit the coordination response message (C-REP) at a maximum available transmission signal power. According to one embodiment, the coordination response message (C-REP) may be transmitted at a high signal power and thus the at least one neighboring base station can receive the message with a higher reliability because the coordination response message (C-REP) is used only to respond to the coordination request message (C-REQ).

In one embodiment, a base station (BS) in a wireless communication system of shared spectrum resources between base stations of the same business entity or different business entities in an unlicensed frequency band or a shared frequency band are provided. The BS may include a transceiver and at least one processor operably connected to the transceiver. A reservation mode may be a mode of transmitting data according to a result of coordination with at least one neighboring base station. An opportunistic mode may be a mode of transmitting data without pre-coordination with neighbor base stations. During the opportunistic mode, the at least one processor may be configured to identify a signal power received from other base stations in a time slot of a data transmission period, the time slot not being reserved by the base station, adjust a transmission signal power used to transmit data based on the identified signal power when the time slot is not used by a certain based station having a reservation priority/right, or even when the time slot is being used by the certain base station not having the reservation priority/right, when the BS identifies a signal power equal to or smaller than the threshold value, and transmit the data via the time slot, or at the adjusted transmission signal power level such that the transmission of the data is overlapped with transmission of another base station that already transmits data in the time slot period.

In one embodiment, to prevent an opportunistic mode from being overused by base stations, a spectrum sharing management entity may additionally configure a protection value with respect to transmission of a base station having a reservation right/priority. The spectrum sharing management entity may differentially configure the protection value to base stations of a same business entity and base stations of different business entities. According to one embodiment, opportunistic transmission between the base stations of the same business entity is further allowed, compared to that between the base stations of the different business entities.

Other technical features may be readily apparent to one skilled in the art from the following figures, descriptions, and claims.

### [Mode for Invention]

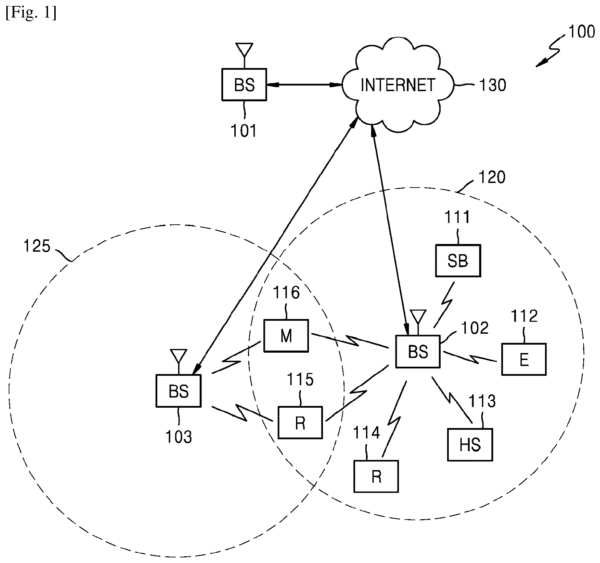

FIGURE 1 through FIGURE 21, discussed below, and the various embodiments used to describe the principles of the present disclosure are by way of illustration only and should not be construed in any way to limit the scope of the disclosure. Those skilled in the art will understand that the principles of the present disclosure may be implemented in any suitably arranged system or device.

The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and Band C.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

In the present disclosure, the term "shared spectrum" is used in an inclusive manner without the distinction on the shared spectrum and unlicensed spectrum and the term "shared spectrum" also includes not only the currently available spectrums but also spectrums that will be made available in the future. Thus, the term "shared spectrum" should not be interpreted as a limiting factor in determining the scope of the present disclosure.

Definitions for other certain words and phrases are provided throughout this patent document. Those of ordinary skill in the art should understand that in many if not most instances, such definitions apply to prior as well as future uses of such defined words and phrases.

In US, unlicensed or shared spectrums are continuously being opened or planned to be opened by federal communications commission (FCC). For example, 3.55 - 3.7 GHz CBRS band has a unique three-tiered access model, which includes incumbent (federal user, fixed satellite service), priority access licensees (PALs), and general authorized access (GAA) in descending order of priority [FCC 16-55]. For another example, 5925-7125 MHz band and 5925-6425MHz band are under consideration in US and EU, respectively, for unlicensed use. Regulation is expected to be finished in 2019-2020 time frame. For another example, 37-38.6 GHz band is expected to be opened. When FCC published the rules for spectrum frontiers (5G), it was suggested that the band could be shared between commercial systems and "future" federal systems. The sharing framework is expected to be distinguished from general unlicensed spectrum [FCC 16-89]. For another example, 60 GHz band had been extended to 57 - 71 GHz for unlicensed use [FCC 16-89]. Opening more unlicensed or shared spectrums can be seen as a global trend. It can be seen that the spectrum utilizations fluctuate temporally and geographically. Sharing the spectrum via multiplexing between different entities will enable more efficient utilization of the spectrum, whether it is unlicensed or shared spectrum. In existing unlicensed spectrums, e.g., 2.4 GHz, 5 GHz, the channel access is based on random access, i.e., CSMA/CA. It is known that CSMA/CA with exponential back-off lowers the airtime utilization efficiency when the network densifies. Fundamentally, there is no promise on the accessibility of the spectrum. Also, sharing itself is non-cooperative as the sharing is based on regulations set by regulatory bodies and the sharing is controlled by fixed rules, e.g., [EN 301 893].

The following documents are hereby incorporated by reference into the present disclosure as if fully set forth herein: "[FCC 16-89] Federal Communications Commission, REPORT AND ORDER AND FURTHER NOTICE OF PROPOSED RULEMAKING," July 14, 2016; "[FCC 16-55] Federal Communications Commission, ORDER ON RECONSIDERATION AND SECOND REPORT AND ORDER," May 2, 2016; and "[EN 301 893] ETSI EN 301 893, 5 GHz RLAN; Harmonised Standard covering the essential requirements of article 3.2 of Directive 2014/53/EU," V2.0.7 (2016-11).

FIGURES 1-3 below describe various embodiments implemented in wireless communications systems and with the use of orthogonal frequency division multiplexing (OFDM) or orthogonal frequency division multiple access (OFDMA) communication techniques. The descriptions of FIGURES 1-3 are not meant to imply physical or architectural limitations to the manner in which different embodiments may be implemented. Different embodiments of the present disclosure may be implemented in any suitably-arranged communications system.

FIGURE 1 illustrates an example wireless network according to embodiments of the present disclosure. The embodiment of the wireless network shown in FIGURE 1 is for illustration only. Other embodiments of the wireless network 100 could be used without departing from the scope of the present disclosure.

As shown in FIGURE 1, the wireless network may include network entites including a gNB 101, a gNB 102, and a gNB 103. The gNB 101 may communicate with the gNB 102 and the gNB 103. The gNB 101 may also communicate with at least one network 130, such as the Internet, a proprietary Internet Protocol (IP) network, or other data network.

The gNB 102 may provide wireless broadband access to the network 130 for a first plurality of user equipments (UEs) within a coverage area 120 of the gNB 102. The first plurality of UEs may include a UE 111, which may be located in a small business (SB); a UE 112, which may be located in an enterprise (E); a UE 113, which may be located in a WiFi hotspot (HS); a UE 114, which may be located in a first residence (R); a UE 115, which may be located in a second residence (R); and a UE 116, which may be a mobile device (M), such as a cell phone, a wireless laptop, a wireless PDA, or the like. The gNB 103 may provide wireless broadband access to the network 130 for a second plurality of UEs within a coverage area 125 of the gNB 103. The second plurality of UEs may include the UE 115 and the UE 116. In some embodiments, one or more of the gNBs 101-103 may communicate with each other and with the UEs 111-116 using 5G, LTE, LTE-A, WiMAX, WiFi, or other wireless communication techniques.

Depending on the network type, the term "network entity," "base station," or "BS" can refer to any component (or collection of components) configured to provide wireless access to a network, such as transmit point (TP), transmit-receive point (TRP), an enhanced base station (eNodeB or eNB), a 5G base station (gNB), a macrocell, a femtocell, a WiFi access point (AP), or other wirelessly enabled devices. Base stations may provide wireless access in accordance with one or more wireless communication protocols, e.g., 5G 3GPP new radio interface/access (NR), long term evolution (LTE), LTE advanced (LTE-A), high speed packet access (HSPA), Wi-Fi 802.11a/b/g/n/ac, etc. For the sake of convenience, the terms "BS" and "TRP" are used interchangeably in this disclosure to refer to network infrastructure components that provide wireless access to remote terminals. Also, depending on the network type, the term "user equipment" or "UE" can refer to any component such as "mobile station," "subscriber station," "remote terminal," "wireless terminal," "receive point," or "user device." For the sake of convenience, the terms "user equipment" and "UE" are used in this disclosure to refer to remote wireless equipment that wirelessly accesses a BS, whether the UE is a mobile device (such as a mobile telephone or smartphone) or is normally considered a stationary device (such as a desktop computer or vending machine).

Dotted lines may show the approximate extents of the coverage areas 120 and 125, which are shown as approximately circular for the purposes of illustration and explanation only. It should be clearly understood that the coverage areas associated with gNBs, such as the coverage areas 120 and 125, may have other shapes, including irregular shapes, depending upon the configuration of the gNBs and variations in the radio environment associated with natural and man-made obstructions.

As described in more detail below, one or more of the UEs 111-116 may include circuitry, programing, or a combination thereof, for reception reliability for data and control information in an advanced wireless communication system. In certain embodiments, and one or more of the gNBs 101-103 may include circuitry, programing, or a combination thereof, for efficient inter-network access management for shared spectrum systems.

Although FIGURE 1 illustrates one example of a wireless network, various changes may be made to FIGURE 1. For example, the wireless network could include any number of gNBs and any number of UEs in any suitable arrangement. Also, the gNB 101 could communicate directly with any number of UEs and provide those UEs with wireless broadband access to the network 130. Similarly, each gNB 102-103 could communicate directly with the network 130 and provide UEs with direct wireless broadband access to the network 130. Further, the gNBs 101, 102, and/or 103 could provide access to other or additional external networks, such as external telephone networks or other types of data networks.

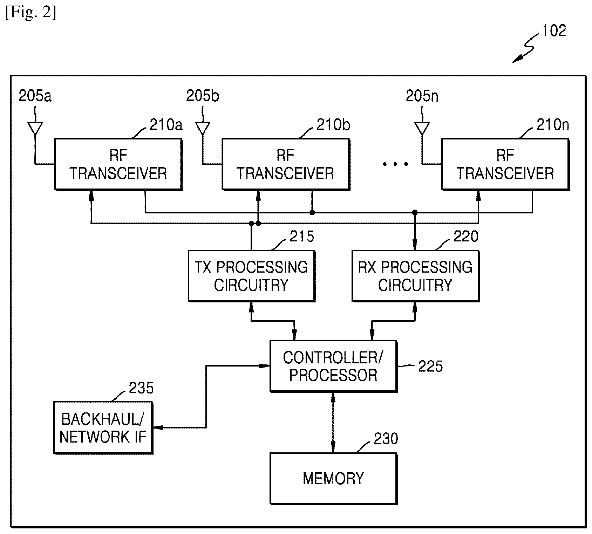

FIGURE 2 illustrates an example network entity of a gNB 102 according to embodiments of the present disclosure. The embodiment of the gNB 102 illustrated in FIGURE 2 is for illustration only, and the gNBs 101 and 103 of FIGURE 1 could have the same or similar configuration. However, gNBs come in a wide variety of configurations, and FIGURE 2 does not limit the scope of the present disclosure to any particular implementation of a gNB.

As shown in FIGURE 2, the gNB 102 may include multiple antennas 205a-205n, multiple RF transceivers 210a-210n, transmit (TX) processing circuitry 215, and receive (RX) processing circuitry 220. The gNB 102 may also include a controller/processor 225, a memory 230, and a backhaul or network interface 235.

The RF transceivers 210a-210n may receive, from the antennas 205a-205n, incoming RF signals, such as signals transmitted by UEs in the network 100. The RF transceivers 210a-210n may down-convert the incoming RF signals to generate IF or baseband signals. The IF or baseband signals may be sent to the RX processing circuitry 220, which generates processed baseband signals by filtering, decoding, and/or digitizing the baseband or IF signals. The RX processing circuitry 220 may transmit the processed baseband signals to the controller/processor 225 for further processing.

The TX processing circuitry 215 may receive analog or digital data (such as voice data, web data, e-mail, or interactive video game data) from the controller/processor 225. The TX processing circuitry 215 may encode, multiplex, and/or digitize the outgoing baseband data to generate processed baseband or IF signals. The RF transceivers 210a-210n may receive the outgoing processed baseband or IF signals from the TX processing circuitry 215 and up-converts the baseband or IF signals to RF signals that are transmitted via the antennas 205a-205n.

The controller/processor 225 can include one or more processors or other processing devices that control the overall operation of the gNB 102. For example, the controller/processor 225 could control the reception of forward channel signals and the transmission of reverse channel signals by the RF transceivers 210a-210n, the RX processing circuitry 220, and the TX processing circuitry 215 in accordance with well-known principles. The controller/processor 225 could support additional functions as well, such as more advanced wireless communication functions. For instance, the controller/processor 225 could support beam forming or directional routing operations in which outgoing signals from multiple antennas 205a-205n are weighted differently to effectively steer the outgoing signals in a desired direction. Any of a wide variety of other functions could be supported in the gNB 102 by the controller/processor 225.

The controller/processor 225 may be also capable of executing programs and other processes resident in the memory 230, such as an OS. The controller/processor 225 can move data into or out of the memory 230 as required by an executing process.

The controller/processor 225 may be also coupled to the backhaul or network interface 235. The backhaul or network interface 235 may allow the gNB 102 to communicate with other devices or systems over a backhaul connection or over a network. The interface 235 could support communications over any suitable wired or wireless connection(s). For example, when the gNB 102 is implemented as part of a cellular communication system (such as one supporting 5G, LTE, or LTE-A), the interface 235 could allow the gNB 102 to communicate with other gNBs over a wired or wireless backhaul connection. When the gNB 102 is implemented as an access point, the interface 235 could allow the gNB 102 to communicate over a wired or wireless local area network or over a wired or wireless connection to a larger network (such as the Internet). The interface 235 may include any suitable structure supporting communications over a wired or wireless connection, such as an Ethernet or RF transceiver.

The memory 230 is coupled to the controller/processor 225. Part of the memory 230 could include a RAM, and another part of the memory 230 could include a Flash memory or other ROM.

Although FIGURE 2 illustrates one example of the gNB 102, various changes may be made to FIGURE 2. For example, the gNB 102 could include any number of each component shown in FIGURE 2. As a particular example, an network entity could include a number of interfaces 235, and the controller/processor 225 could support routing functions to route data between different network addresses. As another particular example, while shown as including a single instance of TX processing circuitry 215 and a single instance of RX processing circuitry 220, the gNB 102 could include multiple instances of each (such as one per RF transceiver). Also, various components in FIGURE 2 could be combined, further subdivided, or omitted and additional components could be added according to particular needs.

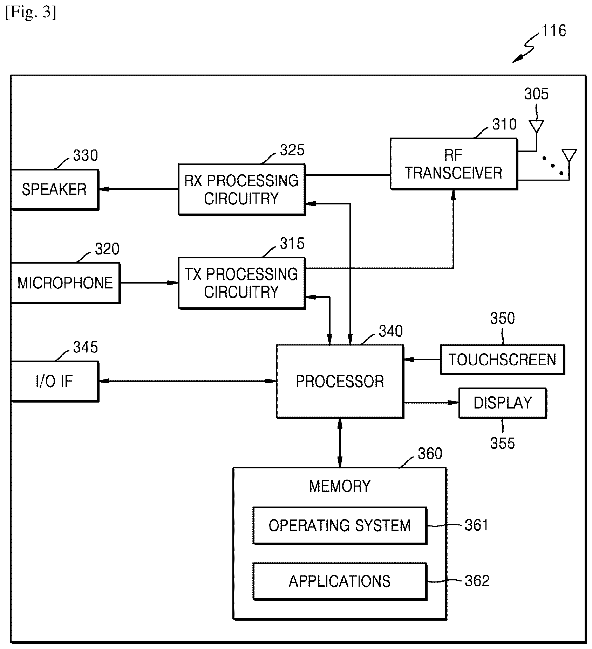

FIGURE 3 illustrates an example UE 116 according to embodiments of the present disclosure. The embodiment of the UE 116 illustrated in FIGURE 3 is for illustration only, and the UEs 111-115 of FIGURE 1 could have the same or similar configuration. However, UEs come in a wide variety of configurations, and FIGURE 3 does not limit the scope of the present disclosure to any particular implementation of a UE.

As shown in FIGURE 3, the UE 116 may include an antenna 305, a radio frequency (RF) transceiver 310, TX processing circuitry 315, a microphone 320, and receive (RX) processing circuitry 325. The UE 116 may also include a speaker 330, a processor 340, an input/output (I/O) interface (IF) 345, a touchscreen 350, a display 355, and a memory 360. The memory 360 may include an operating system (OS) 361 and one or more applications 362.

The RF transceiver 310 may receive, from the antenna 305, an incoming RF signal transmitted by a gNB of the network 100. The RF transceiver 310 may down-convert the incoming RF signal to generate an intermediate frequency (IF) or baseband signal. The IF or baseband signal may be sent to the RX processing circuitry 325, which generates a processed baseband signal by filtering, decoding, and/or digitizing the baseband or IF signal. The RX processing circuitry 325 may transmit the processed baseband signal to the speaker 330 (such as for voice data) or to the processor 340 for further processing (such as for web browsing data).

The TX processing circuitry 315 may receive analog or digital voice data from the microphone 320 or other outgoing baseband data (such as web data, e-mail, or interactive video game data) from the processor 340. The TX processing circuitry 315 may encode, multiplex, and/or digitize the outgoing baseband data to generate a processed baseband or IF signal. The RF transceiver 310 may receive the outgoing processed baseband or IF signal from the TX processing circuitry 315 and up-convert the baseband or IF signal to an RF signal that is transmitted via the antenna 305.

The processor 340 can include one or more processors or other processing devices and execute the OS 361 stored in the memory 360 in order to control the overall operation of the UE 116. For example, the processor 340 could control the reception of forward channel signals and the transmission of reverse channel signals by the RF transceiver 310, the RX processing circuitry 325, and the TX processing circuitry 315 in accordance with well-known principles. In some embodiments, the processor 340 may include at least one microprocessor or microcontroller.

The processor 340 may be also capable of executing other processes and programs resident in the memory 360, such as processes for beam management. The processor 340 can move data into or out of the memory 360 as required by an executing process. In some embodiments, the processor 340 may be configured to execute the applications 362 based on the OS 361 or in response to signals received from gNBs or an operator. The processor 340 may be also coupled to the I/O interface 345, which provides the UE 116 with the ability to connect to other devices, such as laptop computers and handheld computers. The I/O interface 345 may be the communication path between these accessories and the processor 340.

The processor 340 may be also coupled to the touchscreen 350 and the display 355. The operator of the UE 116 can use the touchscreen 350 to enter data into the UE 116. The display 355 may be a liquid crystal display, light emitting diode display, or other display capable of rendering text and/or at least limited graphics, such as from web sites.

The memory 360 may be coupled to the processor 340. Part of the memory 360 could include a random access memory (RAM), and another part of the memory 360 could include a Flash memory or other read-only memory (ROM).

Although FIGURE 3 illustrates one example of the UE 116, various changes may be made to FIGURE 3. For example, various components in FIGURE 3 could be combined, further subdivided, or omitted and additional components could be added according to particular needs. As a particular example, the processor 340 could be divided into multiple processors, such as one or more central processing units (CPUs) and one or more graphics processing units (GPUs). Also, while FIGURE 3 illustrates the UE 116 configured as a mobile telephone or smartphone, UEs could be configured to operate as other types of mobile or stationary devices.

The present disclosure relates generally to wireless communication systems and, more specifically, to reducing power consumption for a user equipment (UE) communicating with a base station and to transmissions to and receptions from a UE of physical downlink control channels (PDCCHs) for operation with dual connectivity. A communication system may include a downlink (DL) that refers to transmissions from a base station or one or more transmission points to UEs and an uplink (UL) that refers to transmissions from UEs to a base station or to one or more reception points.

To meet the demand for wireless data traffic having increased since deployment of 4G communication systems, efforts have been made to develop an improved 5G or pre-5G communication system. Therefore, the 5G or pre-5G communication system is also called a "beyond 4G network" or a "post LTE system." The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), full dimensional MIMO (FD-MIMO), array antenna, an analog beam forming, large scale antenna techniques are discussed in 5G communication systems. In addition, in 5G communication systems, development for system network improvement is under way based on advanced small cells, cloud radio access networks (RANs), ultra-dense networks, device-to-device (D2D) communication, wireless backhaul, moving network, cooperative communication, coordinated multi-points (CoMP), reception-end interference cancellation and the like.

A time unit for DL signaling or for UL signaling on a cell is referred to as a slot and can include one or more symbols. A symbol can also serve as an additional time unit. A frequency (or bandwidth (BW)) unit is referred to as a resource block (RB). One RB may include a number of sub-carriers (SCs). For example, a slot can include 14 symbols, have duration of 1 millisecond or 0.5 milliseconds, and an RB can have a BW of 180 kHz or 360 kHz and include 12 SCs with inter-SC spacing of 15 kHz or 30 kHz, respectively.

DL signals may include data signals conveying information content, control signals conveying DL control information (DCI) formats, and reference signals (RS) that are also known as pilot signals. A gNB can transmit data information (e.g., transport blocks) or DCI formats through respective physical DL shared channels (PDSCHs) or physical DL control channels (PDCCHs). A gNB can transmit one or more of multiple types of RS including channel state information RS (CSI-RS) and demodulation RS (DMRS). A CSI-RS is intended for UEs to measure channel state information (CSI) or to perform other measurements such as ones related to mobility support. A DMRS can be transmitted only in the BW of a respective PDCCH or PDSCH and a UE can use the DMRS to demodulate data or control information.

UL signals also include data signals conveying information content, control signals conveying UL control information (UCI), and RS. A UE may transmit data information (e.g., transport blocks) or UCI through a respective physical UL shared channel (PUSCH) or a physical UL control channel (PUCCH). When a UE simultaneously transmits data information and UCI, the UE can multiplex both in a PUSCH or transmit them separately in respective PUSCH and PUCCH. UCI may include hybrid automatic repeat request acknowledgement (HARQ-ACK) information, indicating correct or incorrect detection of data transport blocks (TBs) by a UE, scheduling request (SR) indicating whether a UE has data in the UE's buffer, and CSI reports enabling a gNB to select appropriate parameters to perform link adaptation for PDSCH or PDCCH transmissions to a UE.

A CSI report from a UE can include a channel quality indicator (CQI) informing a gNB of a modulation and coding scheme (MCS) for the UE to detect a data TB with a predetermined block error rate (BLER), such as a 10% BLER, of a precoding matrix indicator (PMI) informing a gNB how to precode signaling to a UE, and of a rank indicator (RI) indicating a transmission rank for a PDSCH. UL RS may include DMRS and sounding RS (SRS). DMRS is transmitted only in a BW of a respective PUSCH or PUCCH transmission. A gNB can use a DMRS to demodulate information in a respective PUSCH or PUCCH. SRS may be transmitted by a UE to provide a gNB with UL CSI and, for a TDD or a flexible duplex system, to also provide a PMI for DL transmissions. An UL DMRS or SRS transmission can be based, for example, on a transmission of a Zadoff-Chu (ZC) sequence or, in general, of a CAZAC sequence.

DL transmissions and UL transmissions can be based on an orthogonal frequency division multiplexing (OFDM) waveform including a variant using DFT precoding that is known as DFT-spread-OFDM.

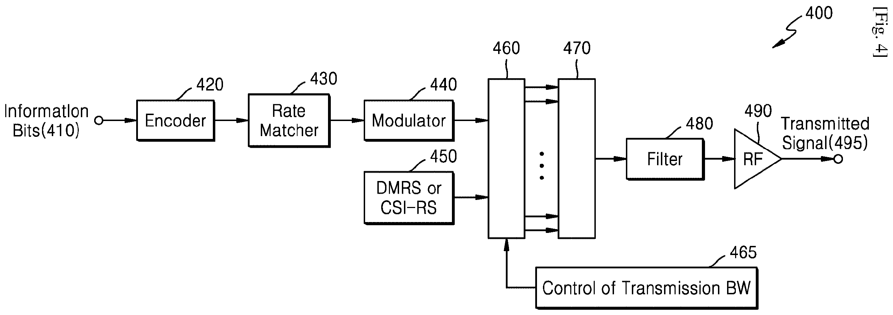

FIGURE 4 illustrates an example transmitter structure 400 using OFDM according to embodiments of the present disclosure. For example, the transmitter structure 400 may be include in the gNB 102 or the UE 116. An embodiment of the transmitter structure 400 shown in FIGURE 4 is for illustration only. One or more of the components illustrated in FIGURE 4 can be implemented in specialized circuitry configured to perform the noted functions or one or more of the components can be implemented by one or more processors executing instructions to perform the noted functions. Other embodiments are used without departing from the scope of the present disclosure.

Information bits, such as DCI bits or data bits 410, may be encoded by encoder 420, rate matched to assigned time/frequency resources by rate matcher 430 and modulated by modulator 440. Subsequently, modulated encoded symbols and DMRS or CSI-RS 450 may be mapped to SCs 460 by SC mapping circuit 465, an inverse fast Fourier transform (IFFT) may be performed by filter 470, a cyclic prefix (CP) may be added by CP insertion circuit 480, and a resulting signal may be filtered by filter 490 and transmitted by an radio frequency (RF) circuit 495.

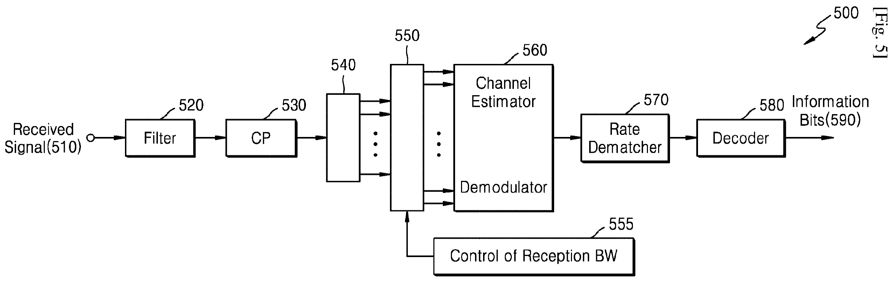

FIGURE 5 illustrates an example receiver structure 500 using OFDM according to embodiments of the present disclosure. For example, the receiver structure 500 may be included in the gNB 102 or the UE 116. An embodiment of the receiver structure 500 shown in FIGURE 5 is for illustration only. One or more of the components illustrated in FIGURE 5 can be implemented in specialized circuitry configured to perform the noted functions or one or more of the components can be implemented by one or more processors executing instructions to perform the noted functions. Other embodiments are used without departing from the scope of the present disclosure.

A received signal 510 may be filtered by filter 520, a CP removal circuit may remove a CP 530, a filter 540 may apply a fast Fourier transform (FFT), SCs de-mapping circuit 550 may de-map SCs selected by BW selector circuit 555, received symbols may be demodulated by a channel estimator and a demodulator circuit 560, a rate de-matcher 570 may restore a rate matching, and a decoder 580 may decode the resulting bits to provide information bits 590.

A UE may typically monitor multiple candidate locations for respective potential PDCCH transmissions to decode multiple candidate DCI formats in a slot. Monitoring a PDCCH candidates may mean receiving and decoding the PDCCH candidate according to DCI formats the UE is configured to receive. A DCI format may include cyclic redundancy check (CRC) bits in order for the UE to confirm a correct detection of the DCI format. A DCI format type may be identified by a radio network temporary identifier (RNTI) that scrambles the CRC bits. For a DCI format scheduling a PDSCH or a PUSCH to a single UE, the RNTI can be a cell RNTI (C-RNTI) and serves as a UE identifier.

For a DCI format scheduling a PDSCH conveying system information (SI), the RNTI can be an SI-RNTI. For a DCI format scheduling a PDSCH providing a random-access response (RAR), the RNTI can be an RA-RNTI. For a DCI format scheduling a PDSCH or a PUSCH to a single UE prior to a UE establishing a radio resource control (RRC) connection with a serving gNB, the RNTI can be a temporary C-RNTI (TC-RNTI). For a DCI format providing TPC commands to a group of UEs, the RNTI can be a TPC-PUSCH-RNTI or a TPC-PUCCH-RNTI. Each RNTI type can be configured to a UE through higher-layer signaling such as RRC signaling. A DCI format scheduling PDSCH transmission to a UE may be also referred to as DL DCI format or DL assignment while a DCI format scheduling PUSCH transmission from a UE may be also referred to as UL DCI format or UL grant.

A PDCCH transmission can be within a set of physical RBs (PRBs). A gNB can configure a UE one or more sets of PRBs, also referred to as control resource sets, for PDCCH receptions. A PDCCH transmission can be in control channel elements (CCEs) that are included in a control resource set. A UE may determine CCEs for a PDCCH reception based on a search space such as a UE-specific search space (USS) for PDCCH candidates with DCI format having CRC scrambled by a RNTI, such as a C-RNTI, that is configured to the UE by UE-specific RRC signaling for scheduling PDSCH reception or PUSCH transmission, and a common search space (CSS) for PDCCH candidates with DCI formats having CRC scrambled by other RNTIs. A set of CCEs that can be used for PDCCH transmission to a UE define a PDCCH candidate location. A property of a control resource set may be transmission configuration indication (TCI) state that provides quasi co-location information of the DMRS antenna port for PDCCH reception.

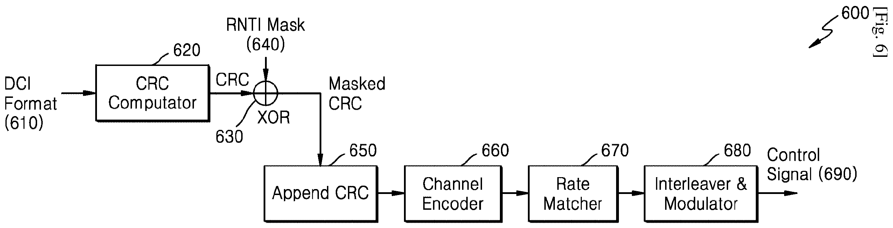

FIGURE 6 illustrates an example encoding process 600 for a DCI format according to embodiments of the present disclosure. For example, the encoding process 600 may performed by the gNB 102. An embodiment of the encoding process 600 shown in FIGURE 6 is for illustration only. One or more of the components illustrated in FIGURE 6 can be implemented in specialized circuitry configured to perform the noted functions or one or more of the components can be implemented by one or more processors executing instructions to perform the noted functions. Other embodiments are used without departing from the scope of the present disclosure.

A gNB may separately encode and transmit each DCI format in a respective PDCCH. A RNTI may mask a CRC of the DCI format codeword in order to enable the UE to identify the DCI format. For example, the CRC and the RNTI can include, for example, 16 bits or 24 bits. The CRC of (non-coded) DCI format bits 610 may be determined using a CRC computation circuit 620, and the CRC may be masked using an exclusive OR (XOR) operation circuit 630 between CRC bits and RNTI bits 640. The XOR operation may be defined as XOR (0,0) = 0, XOR (0,1) = 1, XOR (1,0) = 1, XOR (1,1) = 0. The masked CRC bits may be appended to DCI format information bits using a CRC append circuit 650. An encoder 660 may perform channel coding (such as tail-biting convolutional coding or polar coding), followed by rate matching to allocated resources by rate matcher 670. Interleaving and modulation circuits 680 may apply interleaving and modulation, such as QPSK, and the output control signal 690 may be transmitted.

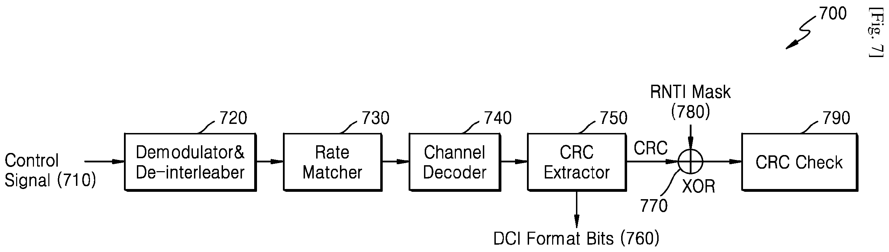

FIGURE 7 illustrates an example decoding process 700 for a DCI format for use with a UE according to embodiments of the present disclosure. For example, the decoding process 700 may be performed by the UE 116. An embodiment of the decoding process 700 shown in FIGURE 7 is for illustration only. One or more of the components illustrated in FIGURE 7 can be implemented in specialized circuitry configured to perform the noted functions or one or more of the components can be implemented by one or more processors executing instructions to perform the noted functions. Other embodiments are used without departing from the scope of the present disclosure.

A received control signal 710 may be demodulated and de-interleaved by a demodulator and a de-interleaver 720. A rate matching applied at a gNB transmitter may be restored by rate matcher 730, and resulting bits may be decoded by decoder 740. After decoding, a CRC extractor 750 may extract CRC bits and provide DCI format information bits 760. The DCI format information bits may be de-masked 770 by an XOR operation with an RNTI 780 (when applicable) and a CRC check may be performed by circuit 790. When the CRC check succeeds (check-sum is zero), the DCI format information bits may be considered to be valid. When the CRC check does not succeed, the DCI format information bits may be considered to be invalid.

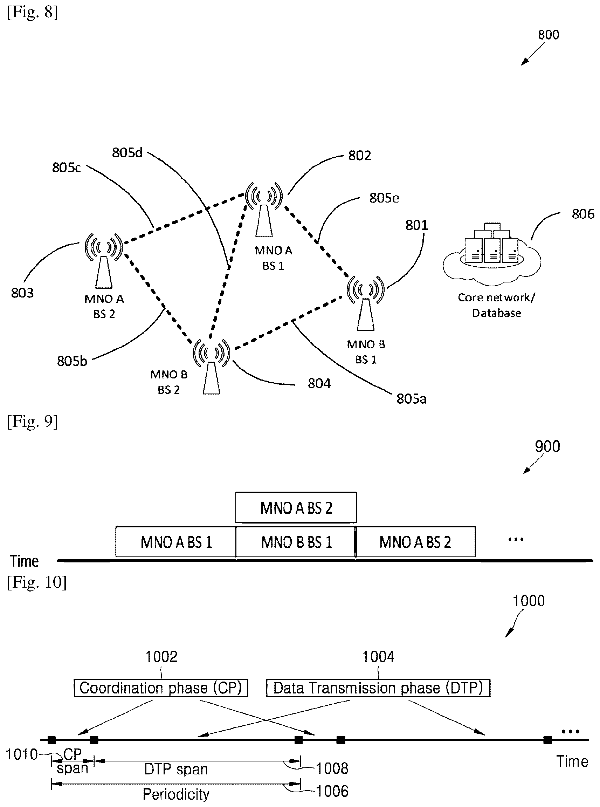

FIGURE 8 illustrates an example multiple base stations (BS) of different MNOs 800 (e.g., network entities) according to embodiments of the present disclosure. An embodiment of the multiple BS of different MNOs 800 shown in FIGURE 8 is for illustration only. Other embodiments are used without departing from the scope of the present disclosure.

FIGURE 8 illustrates a schematic diagram illustrating a network 800 for spectrum sharing where multiple BSs from different MNOs coexist in proximity. As an example, a BS 801 and a BS 804 may belong to one operator (MNO B) and a BS 802 and a BS 803 may belong to another operator (MNO A). The figure should not be interpreted as a limiting factor of the scope of the present disclosure. In other words, there could be multiple different operators with multiple different systems and technologies sharing the spectrum. Elements 805 a, 805 b, 805 c, 805 d, and 805 e may show the interfering relationship. An entity 806 can be, as an example, core network of each operator or can be also a database which does not belong to any of the operators and communicates with operators.

FIGURE 9 illustrates an example spectrum sharing 900 according to embodiments of the present disclosure. An embodiment of the spectrum sharing 900 shown in FIGURE 9 is for illustration only. Other embodiments are used without departing from the scope of the present disclosure.

FIGURE 9 illustrates a spectrum sharing situation among different BSs belonging to different MNOs from the network 800. As the BS 801 and the BS 803 are geographically separated and not in the interfering relationship, both of the BSs may transmit simultaneously. On the other hand, as a set of BSs 801, 802, and 804, and a set of BSs 802, 803, and 804 are in a mutually interfering relationship, the set of BSs may share the resources in an orthogonal manner.

The sharing can be enabled in time and/or geographical domains. That is: the spectrum can be shared in a time division multiplexing (TDM) manner between systems/technologies; and the spectrum can be reused simultaneously by geographically separated systems/technologies via spatial reuse.

The sharing framework disclosed in the embodiments of the present disclosure can achieve the above time and/or geographical sharing in a localized and autonomous manner.

FIGURE 10 illustrates an example overall sharing framework 1000 according to embodiments of the present disclosure. An embodiment of the overall sharing framework 1000 shown in FIGURE 10 is for illustration only. Other embodiments are used without departing from the scope of the present disclosure.

In one embodiment, a sharing framework can include a coordination phase (CP) and a data transmission phase (DTP) to enable the spectrum sharing for the network 800 as illustrated in FIGURE 10. The CP, 1002, can be used for over-the-air (OTA) communications between BSs of same/different operators. During the CP, each BS can perform identification of the neighboring BSs, potential parameter negotiation, resource reservation for the following DTP and/or other DTPs, and other coordination operations. The duration of CP 1010 may be located within the corresponding periodicity 1006. The DTP 1004 can be used for coordinated data transmissions by BSs according to the resource reservation made during CP, which may also allow opportunistic data transmissions based on listen-before-talk (LBT), e.g., in the cases that the reserved medium is not utilized. The duration of DTP 1008 may be indicated. In another embodiment, the CP and DTP can use different frequency or code resources.

The resource utilization efficiency of the provided scheme may be proportional to the DTP span 1108 divided by periodicity 1006 in FIGURE 10. The tradeoff between resource utilization efficiency and agility to re-coordinate can be seen. In one embodiment, the CP span, DTP span, and periodicity can be fixed. In another embodiment, one or more of CP span, DTP span, or periodicity can be adjusted.

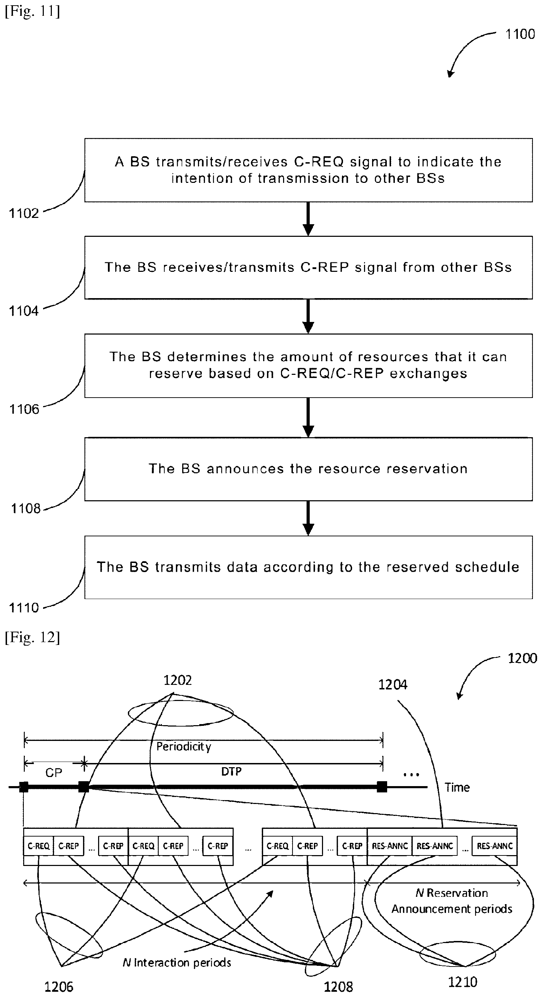

FIGURE 11 illustrates a flowchart of a method 1100 for sharing framework according to embodiments of the present disclosure. For example, the method 1100 may be performed by a network entity such as, for example, gNB 102. An embodiment of the method 1100 shown in FIGURE 11 is for illustration only. One or more of the components illustrated in FIGURE 11 can be implemented in specialized circuitry configured to perform the noted functions or one or more of the components can be implemented by one or more processors executing instructions to perform the noted functions. Other embodiments are used without departing from the scope of the present disclosure.

FIGURE 11 illustrates an example of a method 1100 for coordinating and reserving the resources from a BS perspective consistent with embodiments disclosed herein. The method 1100 can be accomplished by the network 800 (e.g., different MNOs), including the BSs 801, 802, 803, and 804, and the network entity 806. At step 1102, a BS may transmit a coordination request (C-REQ) message and during the CP 1002, the BS can listen to potential C-REQ message transmitted by other BSs. The transmission of C-REQ message can serve to indicate the intention of data transmission in the following DTP 1004 to other BSs. The C-REQ message can be also used by receiving BSs to measure the signal strength and, thereby, to estimate the expected level of interference during DTP 1004.

In one embodiment, the BS may transmit the C-REQ message omni-directionally, while in another embodiment, the BS may transmit the C-REQ using a beam pattern that corresponds to a transmission of the BS in the following DTP. In yet another embodiment, a BS may transmit the C-REQ using a wider beam pattern in the CP, than the beam patter the BS intends to use in the following DTP. At step 1104, the BS may receive coordination response (C-REP) messages from other BSs in response to the C-REQ message transmitted at step 1102. The orders of steps 1102 and 1104 may be interchangeable at each BS and a BS may transmit C-REP messages to other BSs in response to the reception of C-REQ at step 1102.

At step 1106, the BS may determine the amount of resources that the BS can reserve based on C-REQ/C-REP exchanges at steps 1102 and 1104. At step 1108, the BS may announce the resource reservation to other BSs. In reserving the resources, the BS can avoid conflicts with other BSs that the other BSs successfully exchanged C-REP message in a bi-directional manner at step 1102 and 1104. At step 1110, the BS may transmit data according to the reserved schedule coordinated at step 1108.

In one embodiment, the CP can include interaction periods and reservation announcement periods. Each interaction period and reservation announcement period can be discretized and have integer number of sub-periods. In another embodiment, the interaction periods and reservation announcement periods can be continuous time spans for the respective periods and accessed arbitrarily.

In various embodiments, the C-REP and/or C-REQ messages disclosed herein may include additional information such as: a BS cell ID (CID), an operator ID (e.g., PLMN ID), a transmission power level, beam information (e.g., 3dB beamwidth, beam index, etc.), a resource reservation success ratio (e.g., successfully reserved amount vs. requested amount, or successfully reserved attempts vs. total requests, etc.), a priority level in sharing, a BW amount requested, etc.

FIGURE 12 illustrates an example coordination period 1200 according to embodiments of the present disclosure. An embodiment of the coordination period 1200 shown in FIGURE 12 is for illustration only. Other embodiments are used without departing from the scope of the present disclosure.

FIGURE 12 illustrates an exemplary structure of the CP to enable the spectrum sharing for the network 800. Each interaction period 1202 may be denoted. Each reservation announcement period 1210 may be denoted. A BS may have a designated interaction period number, in which the C-REQ message is transmitted in the beginning of the designated interaction period 1206. A BS may also have a designated order of transmitting C-REP messages in each of the interaction period 1208.

In one embodiment, the order of C-REP message transmission may be repeated over interaction periods and a BS may be assigned multiple periods in which the BS can transmit a C-REP message. In another embodiment, the order of C-REP message transmission may change over interaction periods. In another embodiment, the C-REP transmission may happen after all the C-REQ messages are obtained. In another embodiment the C-REPs may be avoided, and each BS may determine resource allocation only using the C-REQ messages each BS receives. In one embodiment, the C-REPs may occupy the same time, frequency or code resources as the C-REQ messages, while in another embodiment the C-REPs may occupy different time, frequency or code resources.

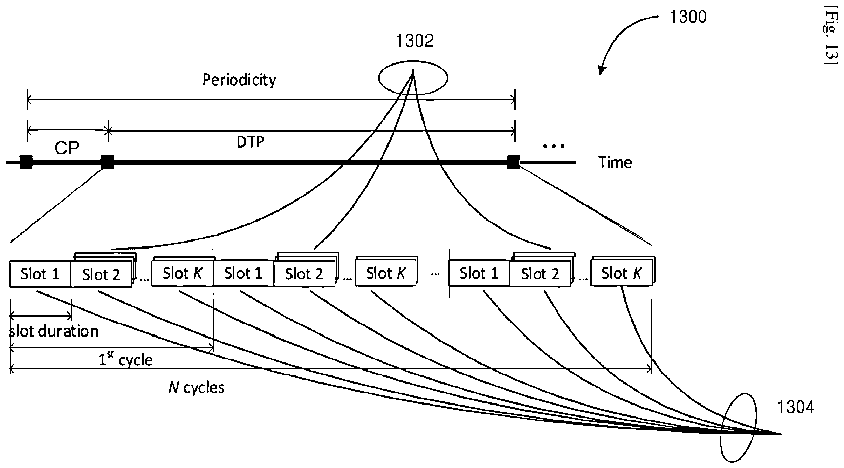

FIGURE 13 illustrates an example DTP structure 1300 according to embodiments of the present disclosure. An embodiment of the DTP structure 1300 shown in FIGURE 13 is for illustration only. Other embodiments are used without departing from the scope of the present disclosure.

In some embodiments, DTP structures are provided. In one embodiment, each DTP may consist of N cycles (*N* ≥1) and each cycle consists of K slots. FIGURE 13 illustrates an exemplary DTP structure consisting of N cycles 1302 and K slots in cycles 1304. In another embodiment, the number of slots in a cycle may be different among the cycles and one or multiple of slots can be included in a cycle.

In one another embodiment of DTP structure, each DTP can be flexibly structured such that in RES-ANNC, the reserved duration can be indicated by a pair {starting instance, duration} or, alternatively, a pair {starting instance, end instance}. More than one disjoint time durations can be reserved so long as the total duration does not exceed the allowance.

As illustrated in FIGURE 11, a BS may transmit coordination request (C-REQ) message at operation 1102. The C-REQ transmission may occur in one of the interaction periods denoted by 1206.

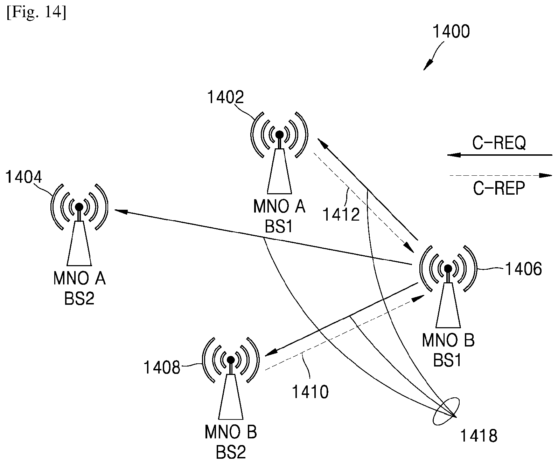

FIGURE 14 illustrates an example coordination message exchanges 1400 according to embodiments of the present disclosure. An embodiment of the coordination message exchanges 1400 shown in FIGURE 14 is for illustration only. Other embodiments are used without departing from the scope of the present disclosure.

FIGURE 14 illustrates an embodiment on a network exchanging the C-REP/C-REQ coordination messages. As an example, a BS 1406 may transmit the C-REQ message over wireless links 1408. In one embodiment, the C-REQ message can be transmitted in an omnidirectional manner from a BS. In another embodiment, the C-REQ message can be transmitted in a directional manner with optional beam sweeping over different directions.

In one example, a BS 1402 and a BS 1408 may respond to the BS 1406 with C-REP messages transmitted over wireless links 1412 and 1410, respectively, while a BS 1404 do not respond to the BS 1406 with any C-REP message. The response message, C-REP, can be transmitted to the originator of C-REQ in multiple different ways.

In one embodiment, C-REP can be transmitted in a time staggered manner among corresponding BSs, e.g., TDM as exemplified in schematic diagram 1100. In another embodiment, the C-REP message can be transmitted simultaneously among corresponding BSs but with different signatures to distinguish the signals, e.g., using different codes, beam directions, or frequency resources among the BSs, etc.

In one embodiment, C-REQ can be transmitted with a power *P_{Tx}*, which may be set as the same with the intended *P_{Tx}* during DTP 1004 in FIGURE 10 for data transmission. This can allow neighboring BSs to estimate the actual level of interference during the data transmission. In another embodiment, a C-REQ message can be transmitted with *P_{Tx}*, which may be set as Δ dB higher than the intended *P_{Tx}* during DTP. This can allow more reliable communication during CP as high reliability of communication during the coordination phase is of importance. In this case, the power adjustment, Δ dB, which can be used to boost or reduce the power depending on situations, needs to be indicated in the C-REQ message such that the neighboring BSs can know what may be the actual level of interference during the data transmission without the Δ dB power adjustment.

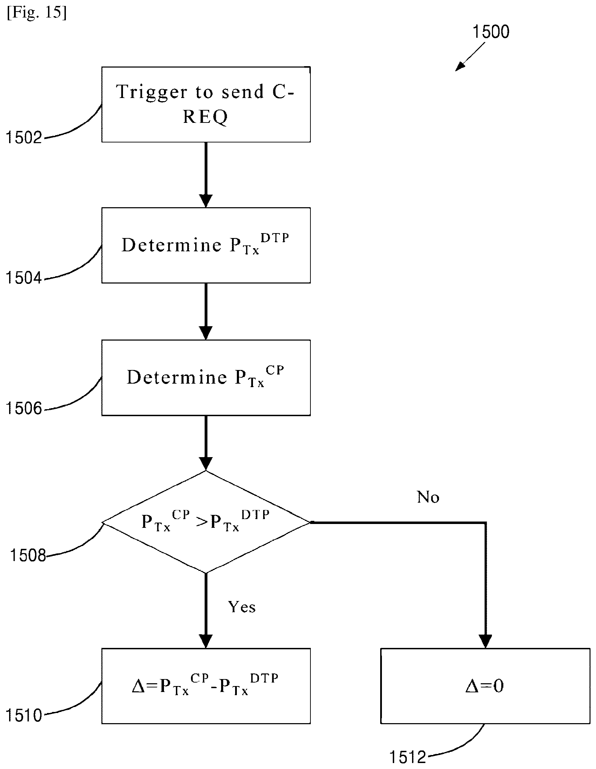

FIGURE 15 illustrates a flowchart of a method 1500 for determining the power adjustment for CP according to embodiments of the present disclosure. For example, the method 1500 may be performed by a network entity such as, for example, gNB 102. An embodiment of the method 1500 shown in FIGURE 15 is for illustration only. One or more of the components illustrated in FIGURE 15 can be implemented in specialized circuitry configured to perform the noted functions or one or more of the components can be implemented by one or more processors executing instructions to perform the noted functions. Other embodiments are used without departing from the scope of the present disclosure.

FIGURE 15 illustrates a method 1500 for determining the transmission power adjustment during CP 1002 from a BS perspective consistent with embodiments disclosed herein, as may be performed by each BS transmitting a C-REQ message. In one network, a BS 1406 can perform the method 1500 to determine the power for C-REQ transmission. At step 1504, the BS may determine the transmission power level, ${P}_{Tx}^{DTP}$, to be used during the reserved schedule in DTP. At step 1506, the BS may determine the transmission power level, ${P}_{Tx}^{CP}$, to be used during CP. If the transmission power levels between CP and DTP are different, the amount of power adjustment may be calculated as at step 1510.

In one embodiment, power adjustment value Δ dB may be indicated in a C-REQ message. In another embodiment, a power adjustment value Δ dB can be negotiated between networks or entities controlling different networks or between neighboring BSs. As an example, such negotiation can happen through a C-REP message exchanges or through a core network.

In each interaction period, neighboring BSs may listen to the C-REQ message and determine to respond with a C-REP message or not. As an example, such determination can be based on the received signal strength of the C-REQ message compared to a certain threshold. One of such threshold rule can be for example to compare ${P}_{Rx}^{C - REQ}$ with $TH \left({P}_{Tx}^{DTP}\right) + Δ$, where ${P}_{Rx}^{C - REQ}$ is the received signal power from a BS transmitting C-REQ, ${P}_{Tx}^{DTP}$ is the intended transmission power during DTP of a node sending C-REP, and *TH*(·) is a function which can output a threshold value depending on the input transmission power.

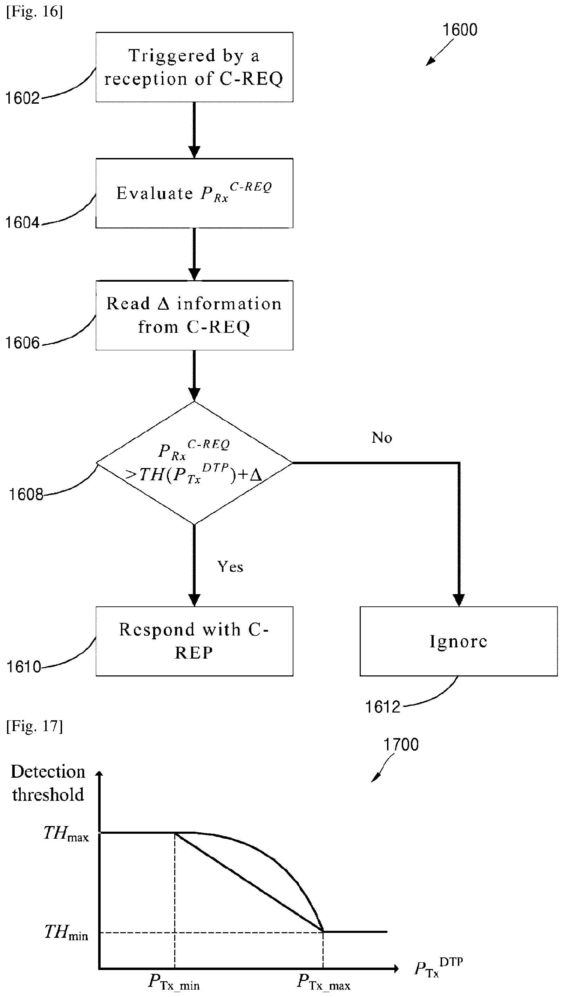

FIGURE 16 illustrates a flowchart of a method 1600 for deciding the C-REP response according to embodiments of the present disclosure. For example, the method 1600 may be performed by a network entity such as, for example, gNB 102. An embodiment of the method 1600 shown in FIGURE 16 is for illustration only. One or more of the components illustrated in FIGURE 16 can be implemented in specialized circuitry configured to perform the noted functions or one or more of the components can be implemented by one or more processors executing instructions to perform the noted functions. Other embodiments are used without departing from the scope of the present disclosure.

FIGURE 16 illustrates an exemplary method 1600 to determine the C-REP transmission in response to the reception of a C-REQ message from a BS perspective consistent with embodiments disclosed herein. The method 1600 can be triggered by a reception of a C-REQ message as indicated by step 1602. At step 1604, a BS may evaluate the received C-REQ signal strength.

In one embodiment, a C-REQ signal may include a signal modulated by a sequence that can be detected with a correlator type receiver. There could be many variations on the sequence type that can be included in the C-REQ signal. The correlator output level can be one example of measured C-REQ signal strength. Other methods may be not precluded such as an energy detection-based scheme. If a C-REQ message includes power adjustment information, i.e., Δ dB, then the BS may read the information from the C-REQ message as at step 1606. If the C-REQ message does not include power adjustment information, then Δ can be set to zero and step 1606 can be omitted. At operation 1608, the BS may compare ${P}_{Rx}^{C - REQ}$ with $TH \left({P}_{Tx}^{DTP}\right) + Δ$ and determine to respond with the C-REP message or not as at steps 1610 and 1612.

FIGURE 17 illustrates an example detection threshold function 1700 according to embodiments of the present disclosure. An embodiment of the detection threshold function 1700 shown in FIGURE 17 is for illustration only. One or more of the components illustrated in FIGURE 17 can be implemented in specialized circuitry configured to perform the noted functions or one or more of the components can be implemented by one or more processors executing instructions to perform the noted functions. Other embodiments are used without departing from the scope of the present disclosure.

FIGURE 17 illustrates a function *TH*(·) which can be employed to determine detection threshold. The function can be realized in various forms. As an example, the function may include one or multiple of upper bound, a lower bound, a linear expression, and a non-linear expression.

Through method 1500 as illustrated in FIGURE 15 and 1600 as illustrated in FIGURE 16, each BS may determine a set of BSs that the set of BSs needs to share the resource in an orthogonal manner and another set of BSs with which the other set of BSs can spatially reuse and share the resource. During the reservation announcement period, each BS may send out a schedule of intended transmissions during DTP in the RES-ANNC message at step 1108.

During reservation announcement period 1210, a BS may listen to RES-ANNC signal from other BSs during non-designated reservation announcement periods which may be earlier than a designated period of the BS, and the BS may determine a resource reservation in a nonconflicting manner with other BSs that the BS has exchanged a C-REP message bi-directionally.

A BS can transmit data in DTP, 1004 as illustrated in FIGURE 10, as at step 1110 as illustrated in FIGURE 11 according to the schedule which may be announced during the reservation announcement period 1210 as illustrated in FIGURE 12. It is possible that a BS may stay idle during some of the reserved resource. It may be due to the emptiness in an outgoing buffer of the BS. It may be due to other reasons as well. In one embodiment, unused resources can be utilized by other BSs. In another embodiment, a resource, which is currently in use, can be still utilized by other BSs. In this case, the secondary system may need to manage such that a transmission power is low, and it does not adversely affect the on-going transmission.

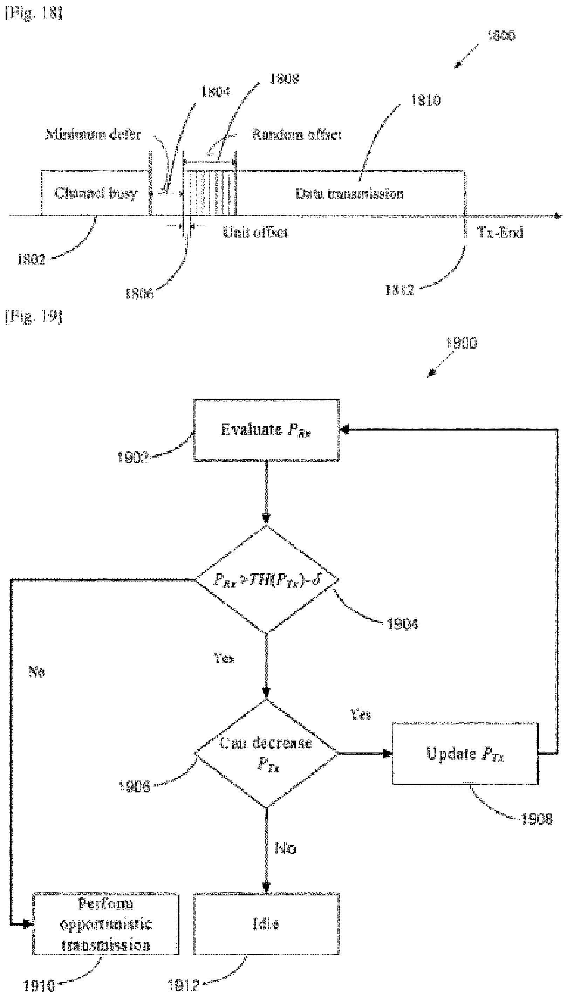

FIGURE 18 illustrates an example channel sensing for opportunistic data transmission 1800 according to embodiments of the present disclosure. An embodiment of the channel sensing for opportunistic data transmission 1800 shown in FIGURE 18 is for illustration only. One or more of the components illustrated in FIGURE 18 can be implemented in specialized circuitry configured to perform the noted functions or one or more of the components can be implemented by one or more processors executing instructions to perform the noted functions. Other embodiments are used without departing from the scope of the present disclosure.

FIGURE 18 illustrates an embodiment on channel sensing for opportunistic data transmission. 1802 may show that the resource may currently be in used by a BS which reserved the resource or by another secondary system opportunistically utilizing the resource. Following the channel busy state, there may be a minimum defer duration 1804 denoted by *Dₘᵢₙ* left idle as the original owner may resume the transmission. Thus, this minimum defer duration may be a means of providing higher priority to the BS which reserved the medium. After *Dₘᵢₙ* duration of inactivity, it may be regarded that the original owner has released the reserved medium.

After a defer duration is sensed idle, a BS may perform additional channel sensing with optional random backoff. The time unit of each backoff may be denoted by 1806. There could be multiple backoff time units as denoted by 1808. In one embodiment, the number of random backoff time units may be randomly determined. As an example, a random number can be uniformly drawn from [X, Y] value range.

In one embodiment, X can be 0. In one embodiment, Y, namely CWS, may be configured or informed to the BSs. In another embodiment, Y can be a function of the number of interaction period N during CP in 1202 as illustrated in FIGURE 12.

In another embodiment, Y can be a function of the number of C-REP messages transmitted by the BS performing channel sensing. In yet another embodiment, Y can be varying and negotiated between the operators. In one embodiment Y can be common. In another embodiment, Y can be cell specific. In yet another embodiment, Y can be operator specific. After successful channel sensing over the optional random backoff period, the BS may start data transmission as denoted by 1810 until Tx-End point 1812. In one embodiment, the Tx-End point may be aligned to one of the slot boundaries within DTP in the structure 1300 illustrated in FIGURE 13.

In another embodiment, an opportunistic transmission may be managed to not go beyond the indicated reservation end instance from the original owner of the reserved resource which may be indicated in a RES-ANNC message.

FIGURE 19 illustrates a flowchart of a method 1900 for determining the opportunistic transmission according to embodiments of the present disclosure. For example, the method 1900 may be performed by a network entity such as, for example, gNB 102. An embodiment of the method 1900 shown in FIGURE 19 is for illustration only. One or more of the components illustrated in FIGURE 19 can be implemented in specialized circuitry configured to perform the noted functions or one or more of the components can be implemented by one or more processors executing instructions to perform the noted functions. Other embodiments are used without departing from the scope of the present disclosure.

FIGURE 19 illustrates a method 1900 to determine the feasibility of opportunistic transmission from a BS perspective consistent with embodiments disclosed herein. A BS which wants to participate opportunistic transmission may measure the received signal power over the medium as in step 1902.

In one embodiment, data transmission during DTP 1004 as illustrated in FIGURE 10 may include a signal modulated by a sequence which can be detected with a correlator type receiver. An example of such signal can be a reference signal, a synchronization signal, or any form of training sequences. There could be many variations on the sequence type that can be included in the data transmission. The correlator output level can be one example of measured C-REQ signal strength. Other methods may be not precluded such as energy detection-based scheme.

In step 1904, the received signal power *P_{Rx}* may be compared with a threshold. In one embodiment, the threshold can be a function of intended transmission power *P_{Tx}* by the opportunistic transmitter.

In one example, such threshold function is illustrated in FIGURE 17. The intended transmission power *P_{Tx}* for opportunistic transmission can be different from the DTP power, ${P}_{Tx}^{DTP}$, which may be used to reserve the resource. *δ* is a value to allow for detection margin and to control the spatial reuse. In one embodiment, δ can be set to zero. In another embodiment, *δ* can be set to a positive value. In such embodiment, *δ* can be used to control the level of the spatial reuse. With a larger *δ* value, the opportunistic transmission may be more discouraged.

In one embodiment, the value *δ* can be fixed. In another embodiment, the value *δ* can be negotiated between networks or entities controlling different networks. In yet another embodiment, the value *δ* can be different between the BSs belonging to the same network and between the BSs belonging to different networks. That is, there could be *δ*ᵢₙₜₑᵣ₋ₒₚ and *δ*ᵢₙₜᵣₐ₋ₒₚ. With this distinction, a spatial reuse can be allowed more generously between the BSs in the same network.

In one example where the original owner of the reserved resource does not transmit, the outcome of step 1904 may be "No" without power control, which leads to step 1910. Even when the outcome of step 1904 is "Yes," which leads to step 1906 as illustrated in FIGURE 19, a BS can still attempt to perform opportunistic transmission if the BS can lower a transmission power at steps 1906 and 1908 such that the outcome of step 1904 becomes eventually "No."

If the BS cannot lower a transmission power due to any reason, the BS may surrender the spatial reuse opportunity as at step 1912. If the outcome of step 1904 is positive with the updated intended transmission power level, then the method 1900 may perform opportunistic transmission as at step 1910.

In another embodiment, function *TH*(·) can take the value *δ* as an input and may return the output threshold value adjusted according to the value *δ*.

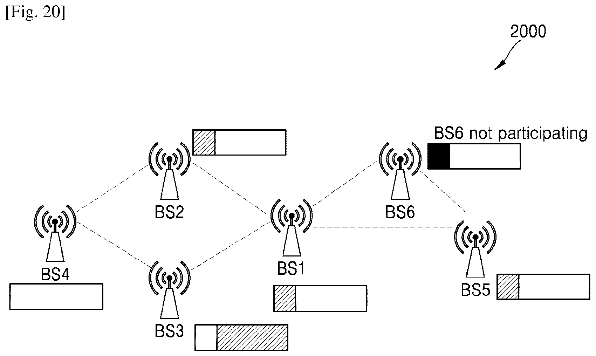

FIGURE 20 illustrates an example spectrum sharing 2000 according to embodiments of the present disclosure. An embodiment of the spectrum sharing 2000 shown in FIGURE 20 is for illustration only. One or more of the components illustrated in FIGURE 20 can be implemented in specialized circuitry configured to perform the noted functions or one or more of the components can be implemented by one or more processors executing instructions to perform the noted functions. Other embodiments are used without departing from the scope of the present disclosure.

As illustrated in FIGURE 20, a BS may opt out of the spectrum sharing for certain coordination phases based on a certain criterion. Upon opting out, the BS may claim access to a guaranteed fixed amount of spectrum resource for this duration. This resource reservation can be transmitted in the C-REQ message by the BS. 1 hop neighbors upon receiving such a reservation decision in a C-REQ message may further broadcast the message to second hop neighbors (to avoid hidden node interference scenarios).

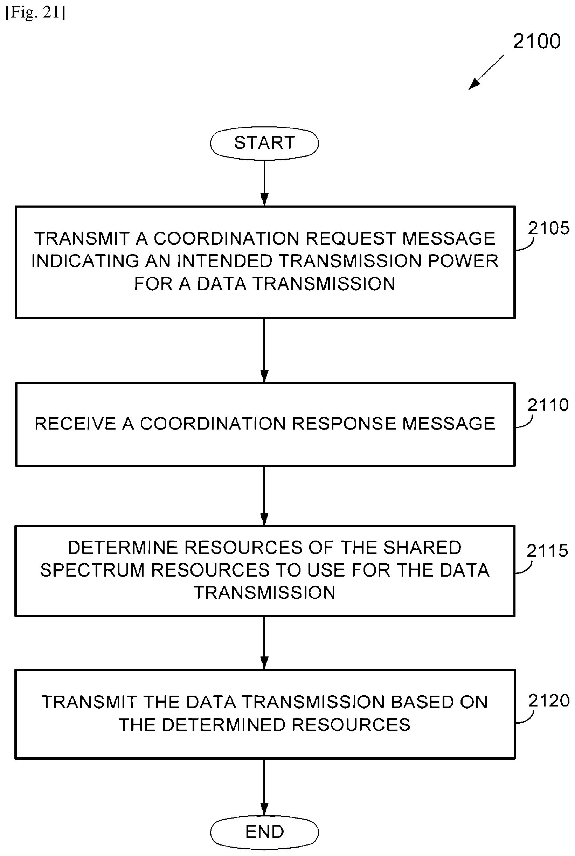

FIGURE 21 illustrates an example of a method 2100 for operating a network entity in a wireless communication system of shared spectrum resources according to embodiments of the present disclosure. For example, the method 2100 is performed by a network entity such as a gNB 102. An embodiment of the method 2100 shown in FIGURE 21 is for illustration only. One or more of the components illustrated in FIGURE 21 can be implemented in specialized circuitry configured to perform the noted functions or one or more of the components can be implemented by one or more processors executing instructions to perform the noted functions. Other embodiments are used without departing from the scope of the present disclosure.

The method 2100 begins with the network entity transmitting, to neighbor network entities in the wireless communication system, a coordination request message indicating an intended transmission power for a data transmission by the network entity (step 2105). For example, in step 2105, the network entity indicates the intended transmission power by transmitting the signal containing the coordination request message at the intended transmission power so that the neighbor network entities can identify an amount of interference that may be caused by the network entities' data transmissions. In another claimed embodiment, the network entity may indicate the intended transmission power by transmitting the signal containing the coordination request message at the intended transmission power plus a power threshold to increase the signal reception at neighboring network entities (e.g., as discussed above with regard to FIG. 15). This threshold is reconfigured or is indicated in the coordination request message. In another claimed embodiment the network entity indicates the intended transmission power by transmitting the signal containing the contents of the coordination request message at a transmission power that is unrelated to the intended transmission power of the data transmission but indicates the intended transmission power in the contents of the coordination request message.

In some embodiments, the network entity may determine some coordination and transmission phases to opt out or not participate in spectrum resource sharing. To opt out, the network entity may transmit, to its neighbor network entities, a coordination request message indicating a fixed amount of spectrum resources reserved by the network entity during the phases the network entity is opting out for and may otherwise not participate in exchanging coordination request and response messages. The one hop neighbor network entities of the network entity may then forward this opt out information and/or fixed reservation information to their neighbor network entities, for example, to avoid hidden node interference scenarios.

Thereafter, the network entity receives, from one or more of the neighbor network entities, a coordination response message in response to the coordination request message. (step 2110). In step 2110, based on the coordination response message the network entity is informed of the coordination information of its neighbor network entity(ies).

In various embodiments, the network entity may be the receiver of coordination request message(s) from neighbor network entity(ies) and may use power information from the coordination request message to determine the potential of interference to the other neighbor network entity(ies). For example, the network entity may determine whether the neighbor network entity is within an interference range of the network entity based on the received coordination request message and the intended transmission power of the network entity. In one example, the network entity may perform this determination by comparing at least a receive power of a signal (i.e., receive power plus potentially the power threshold if used by the neighbor network entity) for the received coordination request message with a threshold. This threshold may be a function of the intended transmission power of the network entity, for example, the intended transmission power of the network entity may be scaled as a function of the amount of signal power loss that may occur between the two network entities and may include an additional threshold to reduce the chances of interference (e.g., as discussed above with regard to FIG. 16).

Additionally, the network entity may determine whether to transmit a coordination response message to the neighbor network entity in response to the received coordination request message based on the determination of whether the other neighbor network entity is within the interference range of the network entity. For example, if the neighbor network entity is outside of the interference range such that the data transmissions of the network entity are not likely to cause interference to the neighbor network entity, the network entity may not need to respond to the neighbor network entity. In one or more of these embodiments, the coordination request and/or response messages may include at least one of a cell identifier, an operator identifier, a transmission power level, transmission beam information, a resource reservation success ratio, a priority level of the network entity for the shared spectrum resources, and/or an amount of bandwidth requested by the network entity.

The network entity then determines resources of the shared spectrum resources to use for the data transmission based on the intended transmission power and the coordination response message (step 2115). For example, in step 2115, the network entity may determine how many neighbors that are within an interference range based on its intended transmission power and the amount of resources that are available to those network entities within its range and reserves resources needed for the data transmission.

In some embodiments, the determined resources may be utilized opportunistically by the network entity. For example, the network entity may not reserve the resources used if the resources are not being used or if the network entity's utilization of the resources would not cause interference to its neighbors. In one embodiment of opportunistic channel access, the network entity may sense whether the resources are idle for an initial offset during a data transmission period and can decide to use these resources for data transmission if the resources are idle for the initial offset. In some embodiments, the network entity may also use additional random backoff counter(s) to perform additional random backoff before using the resources for the data transmission (e.g., as discussed above with regard to FIG. 18). In another embodiment of opportunistic channel access, the network entity may receive a signal transmitted by another of the set of neighbor network entities (e.g., during the data transmission period or as part of coordination) and determine, based on the received signal, whether transmitting the data transmission at the intended transmission power would cause the network entity to interfere with transmissions of the other neighbor network entity. If not, the network entity may use those resources of the non-interfering neighbor network entity. If so, the network entity may perform additional steps to determine if it could decrease the intended transmission power to avoid the interference and still perform the data transmission at the decreased power (e.g., as discussed above with regard to FIG. 19). In some embodiments, this determination may be based on comparison of at least a receive power of the received signal (i.e., receive power plus potentially a power threshold) with a threshold, which is a function of the intended transmission power of the network entity, minus, in some embodiments, a spatial reuse parameter that is selected to control the amount of spatial reuse of resources.

The network entity then transmits to at least one terminal in a cell of the network entity, the data transmission based on the determined resources. (step 2120). For example, in step 2120, the resources for the data transmission may be reserved and dedicated to the network entity or may be used opportunistically.

In one embodiment, a base station (BS) in a wireless communication system of shared spectrum resources between base stations of the same business entity or different business entities in an unlicensed frequency band or a shared frequency band are provided. The BS may include a transceiver and at least one processor operably connected to the transceiver. The at least one processor may be configured to determine a transmission signal power used to transmit data to at least one user equipment (UE) connected to the base station, determine a transmission signal power of a coordination request message (C-REQ) based on the determined transmission signal power used to transmit data, and broadcast the coordination request message (C-REQ) to at least one neighboring base station at the determined transmission signal power of the coordination request message (C-REQ).

In one embodiment, the at least one processor may be further configured to determine the transmission signal power used to transmit data to be low when the at least one of UE is adjacent to the BS, and to be high when the at least one UE is remote from the BS.

In one embodiment, the coordination request message (C-REQ) may be transmitted to coordinate, with other entity, a frequency to be used in an unlicensed frequency band or a shared frequency band.

In one embodiment, the at least one processor may be further configured to determine the determined transmission signal power used to transmit data and the determined transmission signal power of the coordination request message (C-REQ) to be equal to estimate an interference level to occur in an actual data transmission period by the at least one neighboring base station.

In one embodiment, the at least one processor may be further configured to determine the determined transmission signal power of the coordination request message (C-REQ) to be higher by a delta value that determined transmission signal power used to transmit data, and transmit the coordination request message (C-REQ) including information of the delta value to the at least one neighboring base station. According to one embodiment, the at least one neighboring base station can receive the coordination request message (C-REQ) with a higher reliability because the determined transmission signal power of the coordination request message (C-REQ) to be higher by a delta value that determined transmission signal power used to transmit data. In addition, the coordination request message (C-REQ) including information of the delta value can make the at least one neighboring base station to accurately estimate an interference level in an actual data transmission period.

In one embodiment, a base station (BS) in a wireless communication system of shared spectrum resources between base stations of the same business entity or different business entities in an unlicensed frequency band or a shared frequency band are provided. The BS may include a transceiver and at least one processor operably connected to the transceiver. The at least one processor may be configured to determine a transmission signal power used to transmit data to at least one user equipment (UE) connected to the base station, determine a threshold value based on the determined transmission signal power used to transmit data, wherein the threshold value is used in a process of determining whether to respond to a coordination request message (C-REQ) received in a coordination phase, determine whether to transmit a coordination response message (C-REP) by comparing a reception signal power of the coordination request message (C-REQ) with the determine threshold value when the BS receives, from the at least one neighboring base station, the coordination request message (C-REQ), and transmit the coordination response message (C-REP) to the at least one neighboring base station that transmits the coordination request message (C-REQ) when the BS determines to transmit the coordination response message (C-REP).

In one embodiment, the at least one processor may be configured to determine the transmission signal power used to transmit data to be low when the at least one user equipment (UE) is adjacent to the BS, and determine the transmission signal power used to transmit data to be high when the at least one user equipment (UE) is remote from the BS.

In one embodiment, when determining the threshold value, the at least one processor may be further configured to determine the threshold value to be decreased when the BS uses a high transmission signal power used to transmit data, or determine the threshold value to be increased wheh the BS uses a low transmission signal power used to transmit data.

According to one embodiment, when the base station uses the transmission signal power used to transmit data, a remote base station may be affected by a relatively high interference, and thus the base station sets the threshold value to be low and transmits the coordination response message (C-REP), establishing a mutual neighbor relationship with the at least one neighboring base station and deriving orthogonal division of resources.

In one embodiment, when comparing the reception signal power of the coordination request message (C-REQ) with the determined threshold value, wherein the at least one processor may be configured to identify the information of the delta value included in the coordination request message (C-REQ) when the coordination request message (C-REQ) has been power-boosted and then transmitted, decrease the reception signal power of the coordination request message (C-REQ) by the delta value, compare the decreased the reception signal power with the determined threshold value, and transmit the coordination response message (C-REP) when the decreased the reception signal power exceeds the threshold value.

In one embodiment, the at least one processor may be configured to transmit the coordination response message (C-REP) at a maximum available transmission signal power. According to one embodiment, the coordination response message (C-REP) may be transmitted at a high signal power and thus the at least one neighboring base station can receive the message with a higher reliability because the coordination response message (C-REP) is used only to respond to the coordination request message (C-REQ).

In one embodiment, a base station (BS) in a wireless communication system of shared spectrum resources between base stations of the same business entity or different business entities in an unlicensed frequency band or a shared frequency band are provided. The BS may include a transceiver and at least one processor operably connected to the transceiver. A reservation mode may be a mode of transmitting data according to a result of coordination with at least one neighboring base station. An opportunistic mode may be a mode of transmitting data without pre-coordination with neighbor base stations. During the opportunistic mode, the at least one processor may be configured to identify a signal power received from other base stations in a time slot of a data transmission period, the time slot not being reserved by the base station, adjust a transmission signal power used to transmit data based on the identified signal power when the time slot is not used by a certain based station having a reservation priority/right, or even when the time slot is being used by the certain base station not having the reservation priority/right, when the BS identifies a signal power equal to or smaller than the threshold value, and transmit the data via the time slot, or at the adjusted transmission signal power level such that the transmission of the data is overlapped with transmission of another base station that already transmits data in the time slot period.

In one embodiment, to prevent an opportunistic mode from being overused by base stations, a spectrum sharing management entity may additionally configure a protection value with respect to transmission of a base station having a reservation right/priority. The spectrum sharing management entity may differentially configure the protection value to base stations of a same business entity and base stations of different business entities. According to one embodiment, opportunistic transmission between the base stations of the same business entity is further allowed, compared to that between the base stations of the different business entities.

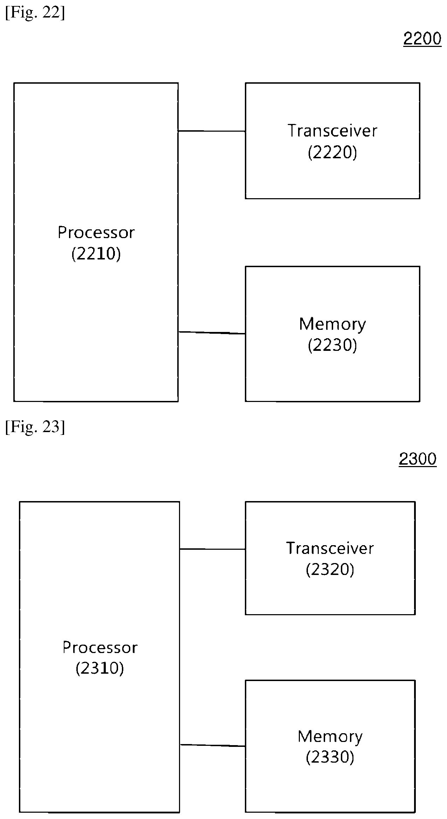

Figure 22 is a block diagram illustrating the structure of a network entity according to embodiments of the present disclosure.

The network entity 2200 may include gNBs, eNBs, or BSs. For example, the network entity 2200 may correspond to one or more of BS 102, 103, and 801-804.

Referring to the FIGURE 22, the network entity 2200 may include a processor 2210, a transceiver 2220 and a memory 2230. However, all of the illustrated components are not essential. The network entity 2200 may be implemented by more or less components than those illustrated in FIGURE 22. In addition, the processor 2210 and the transceiver 2220 and the memory 2230 may be implemented as a single chip according to another embodiment. The aforementioned components will now be described in detail.

The processor 2210 may include one or more processors or other processing devices that control the proposed function, process, and/or method. Operation of the network entity 2200 may be implemented by the processor 2210.

The processor 2210 may control the transceiver 2220 to transmit, to a set of neighbor network entities in the wireless communication system, a coordination request message indicating an intended transmission power for a data transmission by the network entity and receive, from at least one of the set of neighbor network entities, a coordination response message in response to the coordination request message. The processor 2210, operably connected to the transceiver, may determine resources of the shared spectrum resources to use for the data transmission based on the intended transmission power and the coordination response message. In addition, the processor 2210 may control the transceiver 2220 to transmit, to at least one terminal in a cell of the network entity, the data transmission based on the determined resources.

The transceiver 2220 may be connected to the processor 2210 and transmit and/or receive a signal. The signal may include control information and data. In addition, the transceiver 2220 may receive the signal through a wireless channel or a cable channel and output the signal to the processor 2210. The transceiver 2220 may transmit a signal output from the processor 2210 through the wireless channel or the cable channel.

The memory 2230 may store the control information or the data included in a signal obtained by the network entity 2200. The memory 2230 may be connected to the processor 2210 and store at least one instruction or a protocol or a parameter for the proposed function, process, and/or method. The memory 2230 may include read-only memory (ROM) and/or random access memory (RAM) and/or hard disk and/or CD-ROM and/or DVD and/or other storage devices.

FIGURE 23 illustrates a block diagram illustrating the structure of a user equipment (UE) according to embodiments of the present disclosure.

The UEs described above may correspond to the UE 2300. For example, the UE 116 illustrated in FIGURE 3 may correspond to the UE 2300.

Referring to the FIGURE 23, the UE 2300 may include a processor 2310, a transceiver 2320 and a memory 2330. However, all of the illustrated components are not essential. The UE 2300 may be implemented by more or less components than those illustrated in FIGURE 23. In addition, the processor 2310 and the transceiver 2320 and the memory 2330 may be implemented as a single chip according to another embodiment.

The aforementioned components will now be described in detail.

The processor 2310 may include one or more processors or other processing devices that control the proposed function, process, and/or method. Operation of the UE 2300 may be implemented by the processor 2310.

In one embodiment, the processor 2310 may receive a data transmission based on the determined resources.

The transceiver 2320 may include a RF transmitter for up-converting and amplifying a transmitted signal, and a RF receiver for down-converting a frequency of a received signal. However, according to another embodiment, the transceiver 2320 may be implemented by more or less components than those illustrated in components.

The transceiver 2320 may be connected to the processor 2310 and transmit and/or receive a signal. The signal may include control information and data. In addition, the transceiver 3320 may receive the signal through a wireless channel and output the signal to the processor 2310. The transceiver 2320 may transmit a signal output from the processor 2310 through the wireless channel.

The memory 2330 may store the control information or the data included in a signal obtained by the UE 2300. The memory 2330 may be connected to the processor 2310 and store at least one instruction or a protocol or a parameter for the proposed function, process, and/or method. The memory 2330 may include read-only memory (ROM) and/or random access memory (RAM) and/or hard disk and/or CD-ROM and/or DVD and/or other storage devices.

## Claims

1. A base station in a wireless communication system related to shared spectrum resources, the base station comprising:
a transceiver (2220); and
at least one processor (2210) coupled with the transceiver and configured to:
transmit (2105), to a set of at least one neighbor base station in the wireless communication system, a coordination request message,
wherein the coordination request message is associated with a transmission power for a data transmission by the base station in that:
the coordination request message is transmitted at a transmission power same with the transmission power for the data transmission, or
the coordination request message is transmitted at a transmission power increased by a threshold amount compared to the transmission power for the data transmission, or
contents of the coordination request message include the transmission power for the data transmission;
receive (2110), from at least one of the set of at least one neighbor base station, a coordination response message in response to the coordination request message;
determine (2115) at least one shared spectrum resource to use for the data transmission based on the transmission power for the data transmission and the coordination response message; and
transmit (2120), to at least one terminal in a cell of the base station, the data transmission based on the at least one determined shared spectrum resource.

2. The base station of Claim 1, wherein the at least one processor is further configured to:
determine (1504) the transmission power for the data transmission by the base station;
determine (1506) a transmission power for the coordination request message transmission; and
in case that the transmission power for the data transmission and the transmission power for the coordination request message transmission are different, calculate (1510) an amount of power adjustment.

3. The base station of Claim 1, wherein the threshold amount is preset or included in the coordination request message.

4. The base station of Claim 1, wherein the at least one processor is further configured to:
receive, from another base station of the set of at least one neighbor base station, a coordination request message;
determine whether the other at least one neighbor base station is within an interference range of the base station, based on the received coordination request message and the transmission power for the data transmission of the base station; and
determine whether to transmit a coordination response message in response to the received coordination request message, to the at least one other neighbor base station, based on the determination of whether the at least one other neighbor base station is within the interference range of the base station.

5. The base station of Claim 4, wherein to determine whether the at least one other neighbor base station would cause interference to the base station, the at least one processor is configured to:
compare a receive power of the received coordination request message with a threshold that is a function of the transmission power for the data transmission of the base station.

6. The base station of Claim 1, wherein to determine the at least one shared spectrum resource to use for the data transmission, the at least one processor is configured to:
determine, based on sensing, whether the at least one shared spectrum resource, which is not reserved for the base station, is idle for an initial offset during a data transmission period; and
determine to use the at least one shared spectrum resource for the data transmission during the data transmission period, based on determining that the at least one shared spectrum resource is idle for the initial offset.

7. The base station of Claim 6, wherein the at least one processor is further configured to:
use a random backoff counter, when the at least one shared spectrum resource is sensed as idle for the initial offset, to perform additional random backoff before using the at least one shared spectrum resource for the data transmission.

8. The base station of Claim 1, wherein the at least one processor is configured to:
receive a signal transmitted by another of the set of at least one neighbor base station;
determine, based on the received signal, whether transmitting the data transmission at the transmission power for data transmission would cause the base station to interfere with transmissions of the at least one other neighbor base station; and
based on determining that transmitting at the transmission power for the data transmission would cause interference, determine an amount to decrease the transmission power for the data transmission by to avoid the interference and whether the base station can transmit the data transmission at the decreased amount.

9. The base station of Claim 8, wherein the at least one processor is configured to:
determine whether transmitting the data transmission at the transmission power for the data transmission would cause the base station to interfere with transmissions of the at least one other neighbor base station, based on comparison of a receive power of the received signal with a threshold, which is a function of the transmission power for the data transmission of the base station, minus a spatial reuse parameter.

10. The base station of Claim 1, wherein at least one processor is configured to:
determine a phase to not perform spectrum resource sharing; and
transmit, to the set of at least one neighbor base station, a coordination request message indicating a fixed amount of spectrum resources reserved by the base station during the phase for indication to neighbors of the set of at least one neighbor base station.

11. A method for operating a base station in a wireless communication system related to shared spectrum resources, the method comprising:
transmitting (2105), to a set of at least one neighbor base station in the wireless communication system, a coordination request message,
wherein the coordination request message is associated with an transmission power for a data transmission by the base station in that:
the coordination request message is transmitted at a transmission power same with the transmission power for the data transmission, or
the coordination request message is transmitted at a transmission power increased by a threshold amount compared to the transmission power for the data transmission, or
contents of the coordination request message include the transmission power for the data transmission;
receiving (2110), from at least one of the set of at least one neighbor base station, a coordination response message in response to the coordination request message;
determining (2115), at least one shared spectrum resource to use for data transmission based on the transmission power for the data transmission and the coordination response message; and
transmitting (2120), to at least one terminal in a cell of the base station, the data transmission based on the determined at least one shared spectrum resource.

12. The method of Claim 11, wherein further comprising:
determining (1504) the transmission power for the data transmission by the base station;
determining (1506) a transmission power for the coordination request message transmission; and
in case that the transmission power for the data transmission and the transmission power for the coordination request message transmission are different, calculating (1510) an amount of power adjustment.

13. The method of Claim 11, wherein the threshold amount is preset or included in the coordination request message.

14. The method of Claim 11, further comprising:
receiving, from another base station of the set of at least one neighbor base station, a coordination request message;
determining whether the at least one other neighbor base station is within an interference range of the base station, based on the received coordination request message and the transmission power for the data transmission of the base station; and
determining whether to transmit a coordination response message in response to the received coordination request message, to the at least one other neighbor base station, based on the determination of whether the at least one other neighbor base station is within the interference range of the base station.

15. The method of Claim 11, further comprising:
receiving a signal transmitted by another of the set of at least one neighbor base station;
determining, based on the received signal, whether transmitting the data transmission at the transmission power for the data transmission would cause the base station to interfere with transmissions of the at least one other neighbor base station; and
based on determining that transmitting at the transmission power for the data transmission would cause interference, determining an amount to decrease the transmission power for the data transmission by to avoid the interference and whether the base station can transmit the data transmission at the decreased amount.

## Patentansprüche

1. Basisstation in einem drahtlosen Kommunikationssystem in Bezug auf gemeinsam genutzte Spektrumressourcen, wobei die Basisstation umfasst:
einen Sendeempfänger (2220); und
mindestens einen Prozessor (2210), der mit dem Sendeempfänger gekoppelt ist und konfiguriert ist zum:
Übertragen (2105) einer Koordinierungsanforderungsnachricht an einen Satz aus mindestens einer benachbarten Basisstation im drahtlosen Kommunikationssystem,
wobei die Koordinierungsanforderungsnachricht dadurch einer Sendeleistung für eine Datenübertragung durch die Basisstation zugeordnet ist, dass:
die Koordinierungsanforderungsnachricht mit einer Sendeleistung übertragen wird, die gleich der Sendeleistung für die Datenübertragung ist, oder
die Koordinierungsanforderungsnachricht mit einer Sendeleistung übertragen wird, die im Vergleich zur Sendeleistung für die Datenübertragung um einen Schwellenwertbetrag erhöht ist, oder
Inhalte der Koordinierungsanforderungsnachricht die Sendeleistung für die Datenübertragung beinhalten;
Empfangen (2110) einer Koordinierungsantwortnachricht als Reaktion auf die Koordinierungsanforderungsnachricht von mindestens einer aus dem Satz aus mindestens einer benachbarten Basisstation;
Bestimmen (2115) mindestens einer gemeinsam genutzten Spektrumressource, die für die Datenübertragung zu verwenden ist, basierend auf der Sendeleistung für die Datenübertragung und der Koordinierungsantwortnachricht; und
Übertragen (2120) der Datenübertragung an mindestens ein Endgerät in einer Zelle der Basisstation, basierend auf der mindestens einen bestimmten gemeinsam genutzten Spektrumressource.

2. Basisstation nach Anspruch 1, wobei der mindestens eine Prozessor ferner konfiguriert ist zum:
Bestimmen (1504) der Sendeleistung für die Datenübertragung durch die Basisstation;
Bestimmen (1506) einer Sendeleistung für die Übertragung der Koordinierungsanforderungsnachricht; und
falls die Sendeleistung für die Datenübertragung und die Sendeleistung für die Übertragung der Koordinierungsanforderungsnachricht unterschiedlich sind, Berechnen (1510) eines Betrags einer Leistungsanpassung.

3. Basisstation nach Anspruch 1, wobei der Schwellenwertbetrag voreingestellt oder in der Koordinierungsanforderungsnachricht enthalten ist.

4. Basisstation nach Anspruch 1, wobei der mindestens eine Prozessor ferner konfiguriert ist zum:
Empfangen einer Koordinierungsanforderungsnachricht von einer anderen Basisstation aus dem Satz aus mindestens einer benachbarten Basisstation;
Bestimmen, ob sich die andere mindestens eine benachbarte Basisstation innerhalb eines Interferenzbereichs der Basisstation befindet, basierend auf der empfangenen Koordinierungsanforderungsnachricht und der Sendeleistung für die Datenübertragung der Basisstation; und
Bestimmen, ob eine Koordinierungsantwortnachricht als Reaktion auf die empfangene Koordinierungsanforderungsnachricht an die mindestens eine andere benachbarte Basisstation übertragen werden soll, basierend auf der Bestimmung, ob sich die mindestens eine andere benachbarte Basisstation innerhalb des Interferenzbereichs der Basisstation befindet.

5. Basisstation nach Anspruch 4, wobei der mindestens eine Prozessor, um zu bestimmen, ob die mindestens eine andere benachbarte Basisstation eine Interferenz bei der Basisstation verursachen würde, konfiguriert ist zum:
Vergleichen einer Empfangsleistung der empfangenen Koordinierungsanforderungsnachricht mit einem Schwellenwert, der eine Funktion der Sendeleistung für die Datenübertragung der Basisstation ist.

6. Basisstation nach Anspruch 1, wobei der mindestens eine Prozessor, um die mindestens eine gemeinsam genutzte Spektrumressource zu bestimmen, die für die Datenübertragung zu verwenden ist, konfiguriert ist zum:
Bestimmen, basierend auf einer Erfassung, ob die mindestens eine gemeinsam genutzte Spektrumressource, die nicht für die Basisstation reserviert ist, für einen anfänglichen Versatz während eines Datenübertragungszeitraums frei ist; und
Bestimmen, die mindestens eine gemeinsam genutzte Spektrumressource für die Datenübertragung während des Datenübertragungszeitraums zu verwenden, basierend auf dem Bestimmen, dass die mindestens eine gemeinsam genutzte Spektrumressource für den anfänglichen Versatz frei ist.

7. Basisstation nach Anspruch 6, wobei der mindestens eine Prozessor ferner konfiguriert ist zum:
Verwenden eines Zufalls-Backoff-Zählers, wenn die mindestens eine gemeinsam genutzte Spektrumressource für den anfänglichen Versatz als frei erfasst wird, um einen zusätzlichen zufälligen Backoff durchzuführen, bevor die mindestens eine gemeinsam genutzte Spektrumressource für die Datenübertragung verwendet wird.

8. Basisstation nach Anspruch 1, wobei der mindestens eine Prozessor konfiguriert ist zum:
Empfangen eines Signals, das von einer anderen aus dem Satz aus mindestens einer benachbarten Basisstation übertragen wird;
Bestimmen, basierend auf dem Empfangssignal, ob das Übertragen der Datenübertragung mit der Sendeleistung für die Datenübertragung dazu führen würde, dass die Basisstation Übertragungen der mindestens einen anderen benachbarten Basisstation stört; und
basierend auf dem Bestimmen, dass das Übertragen mit der Sendeleistung für die Datenübertragung Interferenz verursachen würde, Bestimmen eines Betrags, um den die Sendeleistung für die Datenübertragung zu verringern ist, um die Interferenz zu vermeiden, und ob die Basisstation die Datenübertragung mit dem verringerten Betrag übertragen kann.

9. Basisstation nach Anspruch 8, wobei der mindestens eine Prozessor konfiguriert ist zum:
Bestimmen, ob das Übertragen der Datenübertragung mit der Sendeleistung für die Datenübertragung dazu führen würde, dass die Basisstation Übertragungen der mindestens einen anderen benachbarten Basisstation stört, basierend auf einem Vergleich einer Empfangsleistung des Empfangssignals mit einem Schwellenwert, der eine Funktion der Sendeleistung für die Datenübertragung der Basisstation abzüglich eines Parameters für räumliche Wiederverwendung ist.

10. Basisstation nach Anspruch 1, wobei mindestens ein Prozessor konfiguriert ist zum:
Bestimmen einer Phase, in der keine gemeinsame Nutzung von Spektrumressourcen durchzuführen ist; und
Übertragen einer Koordinierungsanforderungsnachricht, die eine feste Menge an Spektrumressourcen angibt, die von der Basisstation während der Phase reserviert werden, an den Satz aus mindestens einer benachbarten Basisstation zur Angabe an Nachbarn des Satzes aus mindestens einer benachbarten Basisstation.

11. Verfahren zum Betreiben einer Basisstation in einem drahtlosen Kommunikationssystem in Bezug auf gemeinsam genutzte Spektrumressourcen, wobei das Verfahren umfasst:
Übertragen (2105) einer Koordinierungsanforderungsnachricht an einen Satz aus mindestens einer benachbarten Basisstation im drahtlosen Kommunikationssystem,
wobei die Koordinierungsanforderungsnachricht dadurch einer Sendeleistung für eine Datenübertragung durch die Basisstation zugeordnet ist, dass:
die Koordinierungsanforderungsnachricht mit einer Sendeleistung übertragen wird, die gleich der Sendeleistung für die Datenübertragung ist, oder
die Koordinierungsanforderungsnachricht mit einer Sendeleistung übertragen wird, die im Vergleich zur Sendeleistung für die Datenübertragung um einen Schwellenwertbetrag erhöht ist, oder
Inhalte der Koordinierungsanforderungsnachricht die Sendeleistung für die Datenübertragung beinhalten;
Empfangen (2110) einer Koordinierungsantwortnachricht als Reaktion auf die Koordinierungsanforderungsnachricht von mindestens einer aus dem Satz aus mindestens einer benachbarten Basisstation;
Bestimmen (2115) mindestens einer gemeinsam genutzten Spektrumressource, die für eine Datenübertragung zu verwenden ist, basierend auf der Sendeleistung für die Datenübertragung und der Koordinierungsantwortnachricht; und
Übertragen (2120) der Datenübertragung an mindestens ein Endgerät in einer Zelle der Basisstation, basierend auf der bestimmten mindestens einen gemeinsam genutzten Spektrumressource.

12. Verfahren nach Anspruch 11, wobei, ferner umfassend:
Bestimmen (1504) der Sendeleistung für die Datenübertragung durch die Basisstation;
Bestimmen (1506) einer Sendeleistung für die Übertragung der Koordinierungsanforderungsnachricht; und
falls die Sendeleistung für die Datenübertragung und die Sendeleistung für die Übertragung der Koordinierungsanforderungsnachricht unterschiedlich sind, Berechnen (1510) eines Betrags einer Leistungsanpassung.

13. Verfahren nach Anspruch 11, wobei der Schwellenwertbetrag voreingestellt oder in der Koordinierungsanforderungsnachricht enthalten ist.

14. Verfahren nach Anspruch 11, ferner umfassend:
Empfangen einer Koordinierungsanforderungsnachricht von einer anderen Basisstation aus dem Satz aus mindestens einer benachbarten Basisstation;
Bestimmen, ob sich die mindestens eine andere benachbarte Basisstation innerhalb eines Interferenzbereichs der Basisstation befindet, basierend auf der empfangenen Koordinierungsanforderungsnachricht und der Sendeleistung für die Datenübertragung der Basisstation; und
Bestimmen, ob eine Koordinierungsantwortnachricht als Reaktion auf die empfangene Koordinierungsanforderungsnachricht an die mindestens eine andere benachbarte Basisstation übertragen werden soll, basierend auf der Bestimmung, ob sich die mindestens eine andere benachbarte Basisstation innerhalb des Interferenzbereichs der Basisstation befindet.

15. Verfahren nach Anspruch 11, ferner umfassend:
Empfangen eines Signals, das von einer anderen aus dem Satz aus mindestens einer benachbarten Basisstation übertragen wird;
Bestimmen, basierend auf dem Empfangssignal, ob das Übertragen der Datenübertragung mit der Sendeleistung für die Datenübertragung dazu führen würde, dass die Basisstation Übertragungen der mindestens einen anderen benachbarten Basisstation stört; und
basierend auf dem Bestimmen, dass das Übertragen mit der Sendeleistung für die Datenübertragung Interferenz verursachen würde, Bestimmen eines Betrags, um den die Sendeleistung für die Datenübertragung zu verringern ist, um die Interferenz zu vermeiden, und ob die Basisstation die Datenübertragung mit dem verringerten Betrag übertragen kann.

## Revendications

1. Station de base dans un système de communication sans fil relatif à des ressources de spectre partagé, la station de base comprenant :
un émetteur-récepteur (2220) ; et
au moins un processeur (2210), couplé à l'émetteur-récepteur et configuré pour :
transmettre (2105), à un ensemble d'au moins une station de base voisine dans le système de communication sans fil, un message de demande de coordination,
dans laquelle le message de demande de coordination est associé à une puissance d'émission pour une transmission de données par la station de base en ce que :
le message de demande de coordination est transmis à une puissance d'émission identique à la puissance d'émission pour la transmission de données, ou
le message de demande de coordination est transmis à une puissance d'émission augmentée d'une quantité seuil par rapport à la puissance d'émission pour la transmission de données, ou
le contenu du message de demande de coordination inclut la puissance d'émission pour la transmission de données ;
recevoir (2110), d'au moins une station de base de l'ensemble d'au moins une station de base voisine, un message de réponse de coordination en réponse au message de demande de coordination ;
déterminer (2115) au moins une ressource de spectre partagé à utiliser pour la transmission de données sur la base de la puissance d'émission pour la transmission de données et du message de réponse de coordination ; et
transmettre (2120), à au moins un terminal dans une cellule de la station de base, la transmission de données sur la base de l'au moins une ressource de spectre partagé déterminée.

2. Station de base de la revendication 1, dans laquelle l'au moins un processeur est en outre configuré pour :
déterminer (1504) la puissance d'émission pour la transmission de données par la station de base ;
déterminer (1506) une puissance d'émission pour la transmission du message de demande de coordination ; et
dans le cas où la puissance d'émission pour la transmission de données et la puissance d'émission pour la transmission du message de demande de coordination sont différentes, calculer (1510) une quantité d'ajustement de puissance.

3. Station de base de la revendication 1, dans laquelle la quantité seuil est prédéfinie ou incluse dans le message de demande de coordination.

4. Station de base de la revendication 1, dans laquelle l'au moins un processeur est en outre configuré pour :
recevoir, d'une autre station de base de l'ensemble d'au moins une station de base voisine, un message de demande de coordination ;
déterminer si l'autre au moins une station de base voisine se trouve dans une portée d'interférence de la station de base, sur la base du message de demande de coordination reçu et de la puissance d'émission pour la transmission de données de la station de base ; et
déterminer s'il convient de transmettre un message de réponse de coordination en réponse au message de demande de coordination reçu, à l'au moins une autre station de base voisine, sur la base de la détermination du fait que l'au moins une autre station de base voisine se trouve ou non dans la portée d'interférence de la station de base.

5. Station de base de la revendication 4, dans laquelle, pour déterminer si l'au moins une autre station de base voisine causerait une interférence à la station de base, l'au moins un processeur est configuré pour :
comparer une puissance de réception du message de demande de coordination reçu à un seuil qui est une fonction de la puissance d'émission pour la transmission de données de la station de base.

6. Station de base de la revendication 1, dans laquelle, pour déterminer l'au moins une ressource de spectre partagé à utiliser pour la transmission de données, l'au moins un processeur est configuré pour :
déterminer, sur la base d'une détection, si l'au moins une ressource de spectre partagé, qui n'est pas réservée à la station de base, est libre pendant un décalage initial au cours d'une période de transmission de données ; et
déterminer d'utiliser l'au moins une ressource de spectre partagé pour la transmission de données pendant la période de transmission de données, sur la base de la détermination que l'au moins une ressource de spectre partagé est libre pendant le décalage initial.

7. Station de base de la revendication 6, dans laquelle l'au moins un processeur est en outre configuré pour :
utiliser un compteur de temporisation aléatoire, lorsque l'au moins une ressource de spectre partagé est détectée comme libre pendant le décalage initial, pour effectuer une temporisation aléatoire supplémentaire avant d'utiliser l'au moins une ressource de spectre partagé pour la transmission de données.

8. Station de base de la revendication 1, dans laquelle l'au moins un processeur est configuré pour :
recevoir un signal transmis par une autre station de base de l'ensemble d'au moins une station de base voisine ;
déterminer, sur la base du signal reçu, si la transmission de la transmission de données à la puissance d'émission pour la transmission de données amènerait la station de base à interférer avec des transmissions de l'au moins une autre station de base voisine ; et
sur la base de la détermination que la transmission à la puissance d'émission pour la transmission de données causerait une interférence, déterminer une quantité dont il faut diminuer la puissance d'émission pour la transmission de données afin d'éviter l'interférence et si la station de base peut transmettre la transmission de données à la quantité diminuée.

9. Station de base de la revendication 8, dans laquelle l'au moins un processeur est configuré pour :
déterminer si la transmission de la transmission de données à la puissance d'émission pour la transmission de données amènerait la station de base à interférer avec des transmissions de l'au moins une autre station de base voisine, sur la base d'une comparaison d'une puissance de réception du signal reçu à un seuil, qui est une fonction de la puissance d'émission pour la transmission de données de la station de base, moins un paramètre de réutilisation spatiale.

10. Station de base de la revendication 1, dans laquelle au moins un processeur est configuré pour :
déterminer une phase pour ne pas effectuer de partage de ressources de spectre ; et
transmettre, à l'ensemble d'au moins une station de base voisine, un message de demande de coordination indiquant une quantité fixe de ressources de spectre réservées par la station de base pendant la phase pour l'indication à des voisins de l'ensemble d'au moins une station de base voisine.

11. Procédé de fonctionnement d'une station de base dans un système de communication sans fil relatif à des ressources de spectre partagé, le procédé comprenant :
transmettre (2105), à un ensemble d'au moins une station de base voisine dans le système de communication sans fil, un message de demande de coordination,
dans lequel le message de demande de coordination est associé à une puissance d'émission pour une transmission de données par la station de base en ce que :
le message de demande de coordination est transmis à une puissance d'émission identique à la puissance d'émission pour la transmission de données, ou
le message de demande de coordination est transmis à une puissance d'émission augmentée d'une quantité seuil par rapport à la puissance d'émission pour la transmission de données, ou
le contenu du message de demande de coordination inclut la puissance d'émission pour la transmission de données ;
recevoir (2110), d'au moins une station de base de l'ensemble d'au moins une station de base voisine, un message de réponse de coordination en réponse au message de demande de coordination ;
déterminer (2115) au moins une ressource de spectre partagé à utiliser pour une transmission de données sur la base de la puissance d'émission pour la transmission de données et du message de réponse de coordination ; et
transmettre (2120), à au moins un terminal dans une cellule de la station de base, la transmission de données sur la base de l'au moins une ressource de spectre partagé déterminée.

12. Procédé de la revendication 11, dans lequel, comprenant en outre :
déterminer (1504) la puissance d'émission pour la transmission de données par la station de base ;
déterminer (1506) une puissance d'émission pour la transmission du message de demande de coordination ; et
dans le cas où la puissance d'émission pour la transmission de données et la puissance d'émission pour la transmission du message de demande de coordination sont différentes, calculer (1510) une quantité d'ajustement de puissance.

13. Procédé de la revendication 11, dans lequel la quantité seuil est prédéfinie ou incluse dans le message de demande de coordination.

14. Procédé de la revendication 11, comprenant en outre :
recevoir, d'une autre station de base de l'ensemble d'au moins une station de base voisine, un message de demande de coordination ;
déterminer si l'au moins une autre station de base voisine se trouve ou non dans une portée d'interférence de la station de base, sur la base du message de demande de coordination reçu et de la puissance d'émission pour la transmission de données de la station de base ; et
déterminer s'il convient de transmettre un message de réponse de coordination en réponse au message de demande de coordination reçu, à l'au moins une autre station de base voisine, sur la base de la détermination du fait que l'au moins une autre station de base voisine se trouve ou non dans la portée d'interférence de la station de base.

15. Procédé de la revendication 11, comprenant en outre :
recevoir un signal transmis par une autre station de base de l'ensemble d'au moins une station de base voisine ;
déterminer, sur la base du signal reçu, si la transmission de la transmission de données à la puissance d'émission pour la transmission de données amènerait la station de base à interférer avec des transmissions de l'au moins une autre station de base voisine ; et
sur la base de la détermination que la transmission à la puissance d'émission pour la transmission de données causerait une interférence, déterminer une quantité dont il faut diminuer la puissance d'émission pour la transmission de données afin d'éviter l'interférence et si la station de base peut transmettre la transmission de données à la quantité diminuée.
